# EUROPEAN PATENT SPECIFICATION

(11) **EP 1 632 081 B1**
(45) Date of publication and mention of the grant of the patent: **17.08.2016**
(21) Application number: 04753302.1
(22) Date of filing: 24.05.2004
(51) Int. Cl.: H04M 3/537, H04M 3/53, H04M 3/56, H04L 12/58

(54) **A METHOD AND SYSTEM FOR COMMUNICATING A DATA FILE OVER A NETWORK AND TELECONFERENCING OVER A TELEPHONY NETWORK**
VERFAHREN UND SYSTEM ZUM ÜBERMITTELN EINER DATEN-DATEI ÜBER EIN NETZWERK UND TELEKONFERENZEN ÜBER EIN FERNSPRECHNETZWERK
PROCEDE ET SYSTEME DE COMMUNICATION D'UN FICHIER DE DONNEES SUR UNE RESEAU ET DE TELECONFERENCE SUR UN RESEAU DE TELEPHONIE

(30) Priority: 23.05.2003 US 472989 P; 23.05.2003 US 472990 P; 23.05.2003 US 472994 P; 09.10.2003 US 510214 P; 13.11.2003 US 520471 P
(43) Date of publication of application: 08.03.2006
(73) Proprietor: Kirusa, Inc., New Providence, NJ 07974 (US)
(72) Inventor: CHADDHA, Navin, Cupertino, CA 95014 (US); DESAI, Adesh, Chatsworth, CA91311 (US); KUWADEKAR, Sanjeev, Northridge, CA 91326 (US); SODHI, Dan, Chatsworth, CA 91311 (US)
(74) Representative: Purdylucey Intellectual Property
(86) International application number: PCT/US2004/016448
(87) International publication number: WO 2004/112368

(56) References cited:
- EP-A- 1 164 774
- WO-A-03/030474
- US-A1- 2002 078 150
- US-B1- 6 192 407
- US-B1- 6 246 871
- US-B1- 6 272 214

## Description

### BACKGROUND CONVENTION

### 1. Field of the Invention

The present invention relates to messaging, particularly to transmitting data files over a communication network. The present invention also relates to teleconferencing particularly to establishing a teleconference, over a telephony network.

### 2. Description of Rotated Art

In telecommunication networks, such as cellular wireless networks, various messaging services are available to the subscriber/users, as alternative means of communicating short of calling one another, at times when the initiating party and the intended recipient may not be simultaneously available for or may not desire real time voice communication to take place between them. Such messaging services include voicemail messaging, short message service (SMS) text messaging, multi-media messaging service (MMS), etc. Some of these services are carrier, provider, network or platform dependent (collectively referred hereinafter as network dependent, as opposed to network independent), and some are user device dependent. Network dependent refers to messaging services that would work in one network (e.g., carrier, provider, platform or physical network) but not another, because of differences in operating parameters, specification, limitations, and other characteristics among the different carriers, providers, platforms or physical networks. Such differences may include incompatibilities arising from underlying technologies, communication frequencies, communication platform which may be viewed as the underlying hardware and software that handles communication over a network, communication protocol which may be viewed as the way data is exchanged among user devices, or simply the physical or operational restrictions network providers and carriers imposed to distinguish their services.

For example, in cellular carrier networks, voicemail messaging has been network dependent. Each network may be associated with a different provider that implements a different hardware and/or software platform, and/or utilizes a different set of communication and/or data protocols. For voicemails, each cellular carrier (e.g., AT&T, Verizon, Cingular, etc.) maintains a proprietary voicemail system within its own carrier network. While a person in one cellular carrier network may call another person in another cellular carrier network to leave a voicemail message, voicemails cannot be transferred from one cellular carrier network to another by messaging. However, within the same cellular carrier network, a sender can record a message and forward the message to a designated recipient. Heretofore, voicemail messaging is not available across dissimilar cellular carrier networks and dissimilar platforms within the same network.

SMS text messaging is typically not network dependent. As long as a carrier offers SMS text messaging as a service to its customers, SMS text messaging is compatible over disparate cellular carrier networks. A sender in one network can send an SMS text message to a recipient in another network. Most cellular handsets are enabled with SMS text messaging function. However, SMS text messages have character limitations (typically 160 characters), and a sender may need to send multiple text messages to fully communicate his message. Furthermore, a sender is required to use the awkward text entry interface of a cellular phone to input his message. Voicemail messaging would be the more desirable option in some situations, subject to its network and platform dependency.

MMS offers additional functionalities to support messaging of multi-media files, such as audio, video, graphics, photos, images, music, and other types of digital data. MMS is user device and network dependent. However, while some of the modern cellular handsets may have the capabilities to handle MMS functions, not all handsets are enabled to do so. For a sender of a MMS message, he cannot be certain that the intended recipient has the appropriate handset on the appropriate network that is enabled to receive MMS message.

The above-mentioned incompatibility issues relating to the various messaging services are exacerbated when a sender wishes to send text messages, voice messages and/or multimedia files across disparate networks to disparate devices. The incompatibility issues are further exacerbated for messaging between different categories of communication networks, e.g., voicemail messaging cannot be conducted between a landline phone operating in a public switched telephone network (PSTN) and a cellular phone operating in a cellular network; a landline telephone cannot receive a text message. The differences between providers and devices can create incompatibilities that prevent the receipt of, for example, text messages, voice messages, and multimedia files, across disparate networks.

United Kingdom Patent Application Number 2,387,737 to Munnariz purportedly discloses a telephone message network that stores a voice message from a sender to a recipient. According to its abstract, the sender is prompted by the network to supply, with the voice message, information identifying the recipient, and the network sends a text message to the recipient announcing the existence of the voice message. When the recipient calls to retrieve her voice message, the network selects the appropriate voice message using calling line identity (CLI) to identify the calling device of the intended recipient of the message. The number called by the recipient to retrieve voice message is not uniquely associated with the voice message. Since any person may call the same number to retrieve their own messages, the system can only distinguish between the callers by the callers' CLI. This system does not actually authenticate the caller, as anyone calling with the correct calling device would be presumed to be the intended recipient of the message. Further, this system does not support other types of messaging, such as MMS.

Accordingly, it is desirable to provide an improved messaging system that will enable a sender to send information including data files, such as SMS text messages, voice messages, multimedia files, image files, text files and executable files to a recipient who is not in the same carrier network as the sender.

Teleconferencing involves multiple users connected to the same communication channel, allowing each user to simultaneously talk to each other. A typical teleconference involves multiple participants who each speak on their own communication device such as a phone. In this situation, a teleconference is initiated by a first user establishing a first communication channel, such as a phone call, with a second user. Once the first communication channel is established between the first and second users, the first user then establishes a second communication channel with a third user. Once the second communication channel is established, the first and second communication channels are bridged, whereby all three users can talk to each other.

A teleconference can also be established using a teleconferencing service. The teleconferencing service establishes a central communication channel. Participants call a number and are directly connected to the central communication channel. The central communication channel is pre-scheduled and each participant to the teleconference is notified prior to the teleconference as to the time of the teleconference and what phone number to dial to join.

U.S. Patent Number 8,377,560 purportedly discloses a wireless network with a group call capability. According to its abstract, the wireless network includes a mobile switching center connected to a plurality of base stations each serving a portion of the wireless network and communicating with mobile stations on a plurality of channels. Each base station allocates one of the channels for the group call. Each mobile station in the group sends an acknowledgement of the group call to the base station serving the area where the mobile station is located. Each base station that did not receive an acknowledgement frees the allocated channel for use in other calls. This patent is primarily directed to the underlying technology for overcoming the drawbacks of prior art systems with respect message traffic and system resources. It does not significantly improve user experience in connection with establishing a group call.

U.S. Patent Application Publication No. 2003/0068029 purportedly discloses a user invoked directed outdial method and apparatus. According to a representative flow diagram its disclosure, the process purportedly includes steps wherein a caller calls into a directed outdial system, the caller identifies third parties to be called, the outdial system makes multiple outbound calls to third parties, the outdial system detects which called parties answer their call, the outdial system can further obtain specific information associated with each called party by asking questions and requesting each called party to answer the questions, the outdial system can obtain specific information associated with each called party from the caller or from a database, the outdial system can treat each called party individually based on the information associated with each called party, and connects the initial caller and the called parties in a conference call. A problem with this method is that a phone call invitation to a real time teleconference can be intrusive, particularly if the targeted participant is busy, or does not want to be disturbed at the time the invitation was received.

Accordingly, it is desirable to provide an improved teleconferencing process that invites participants in non-intrusive manner, via a single point.

### SUMMARY OF INVENTION

According to a first aspect of the present invention, there is provided a method for transmitting a data file from a sender to a recipient comprising the steps of:
sender sending said data file to a messaging server over a first communication network;
said messaging server associating said data file with a unique access address;
said messaging server associating said unique access address with a notification message;
said messaging server sending said notification message to said recipient over a second communication network;
said recipient accessing said unique access address to retrieve said data file;
said messaging server identifying the unique access address used by the recipient; and
said messaging server sending said data file corresponding to the unique access address to said recipient
characterised in that said first communication network and said second communication network are disparate networks.

Preferably, said unique access address comprises at least one of a phone number and a web address.

Preferably, said notification message is sent within at least one of a text message, a voice message and an electronic mail.

Preferably, said data file comprises at least one of a text message, a voice message, an audio file, a video file, a text file, an image file, an executable file, and a multimedia file.

Preferably, at least one of the audio file, video file and multimedia file is captured using a sender device, and said data is sent to the messaging server using at least one of store-and- forward and streaming.

Preferably, said at least one of the audio file, video file and multimedia file is send by the messaging server to the recipient using at least one of store-and- forward and streaming.

Preferably, said step of said sender sending said data file comprises the steps of: speaking a voice message into a sender device; and converting said voice message to text using speech-to-text processing.

Preferably, said step of said sender sending said data file comprises the steps of: inputting a text message into a sender device; and converting said text message to a voice message using text-to-speech processing.

Preferably, the sender sends said data file over a communication network subscribed by the sender, and the messaging server sends the notification message to the recipient over a different network subscribed by the recipient.

Preferably, more than one data file is sent, and wherein a different unique access address is associated with a different data file.

Preferably, said messaging server sends notification messages associated with said unique access address to a plurality of recipients.

Preferably, each recipient is assigned a unique access addresses for the same data file.

Preferably, a recipient device that receives the notification message is different from a recipient device that retrieves the data file associated with the unique access address in the notification message.

Preferably, the data file created by the sender further comprises one of a text message and a voice message, and wherein the mode of said data file is converted to a mode appropriate to the type of the intended recipient device.

Preferably, a network through which the notification message is sent to the recipient is different from a network through which the associated data file is retrieved by the recipient.

Preferably, said step of said messaging server identifying the unique access address comprises the steps of: messaging server determining a dialed access phone number with a dialed number identification service (DNIS); and messaging server determining a data file associated with said dialed access phone number.

Preferably, said step of said recipient accessing said unique access address to retrieve said data file further comprises the step of authenticating the recipient.

Preferably, the method further comprises the step of the sender designating a recipient device address to which the notification message is to be sent to the recipient, and the step of authenticating the recipient includes the step of determining the recipient device address.

Preferably, the sender designates more than one recipient device to which notification messages are to be sent to said recipient, thereby providing notification redundancy.

Preferably, a cancellation message is sent to each of the recipient devices that earlier received the notification message once the associated data file is retrieved by the recipient.

Preferably, the data file is transmitted over a cellular network, wherein the sender has a sender cellular device and the recipient has a recipient cellular device, and wherein the sender sends the data file using the sender cellular device, and the recipient accesses the unique access address to retrieve the data file using the recipient cellular device.

Preferably, the notification message is sent via text messaging to the recipient cellular device.

Preferably, the sender cellular device communicates with a first cellular network to which the sender subscribes, and the recipient cellular device communicates with a second cellular network to which the recipient subscribes.

According to a second aspect of the present invention, there is provided a messaging server for transmitting a data file from a sender device to a recipient device comprising: a data receiver receiving said data file from said sender device over a first communication network; a notification message transmitter associating said data file with a unique access address and associating said unique access address with a notification message, and sending said notification message to said recipient device over a second communication network; and a data file transmitter providing access to the recipient using said unique access address, and sending said data file from said messaging server to said recipient device
characterised in that said first communication network and said second communication network are disparate networks.

According to a third aspect of the present invention, there is provided a network system for transmitting a data file from a sender device to a recipient device comprising: one or more nodes to provide access for said sender device; one or more nodes to provide access for said recipient device; one or more nodes to provide access by a messaging server as in the second aspect.

Preferably, said network comprises at least one of a cellular network, a wide area network, a telephony network, an IP network and a data network.

According to a fourth aspect of the present invention, there is provided a machine-readable medium for programming a computer to forward a data file from a sender to a recipient, said medium including processor executable instructions comprising: a program module receiving said data file from said sender device over a first communication network; a program module associating said data file with a unique access address and associating said unique access address with a notification message, and sending said notification message to said recipient device over a second communication network; and a data file transmitter module providing access to the recipient using said unique access address, and sending said data file from said messaging server to said recipient device
characterised in that said first communication network and said second communication network are disparate networks.

The present arrangement is directed to an improved method and system for forwarding information such as data files to a recipient across disparate or incompatible communication networks, which are not constrained by incompatible user devices. The sender sends a message to an intended recipient via a messaging server. The sender is a subscriber of the messaging server, thus the sender device is compatible with the messaging server. In the arrangement, the messaging server communicates with the intended recipient using basic communication tools that are generally compatible regardless of the network that the recipient is subscribed to.

In one arrangement, a sender using a sender device such as a cellular phone, personal digital assistant (PDA), portable computer, personal computer or landline phone sends a message or information to a messaging server. The information may include a data file. Examples of a data file include a voice message, text document, a musical file, a picture file, an executable file and a multimedia file. The messaging server stores the information, creates and sends a notification message to the intended recipient that she has information to be retrieved. The notification message may be in the form of a SMS text message, voice call, or other means of notification that are network independent, or compatible over disparate networks.

The notification message includes a unique access address associated with the message. Different unique access addresses are associated with different messages. In one embodiment, the unique access address may contain a phone number the recipient can call to retrieve her message. The messaging server authenticates the caller to be the intended recipient based on the called number and/or the Caller ID of the caller, and presents the message that had been associated with the unique access address. In another embodiment, the notification message may contain a link to a specific location such as a website where a data file such as a picture file or text document can be downloaded by the recipient. A recipient may use message retrieval devices that may be different from the user device that received the notification message, particularly where the user device may not be compatible with or enabled to retrieve the type of message at the specified location.

The present arrangement is particularly suitable for use in cellular communication systems.

Another arrangement is directed to an improved method and system for establishing a teleconference or group call with a plurality of participants.

A user initiates a teleconference by communicating with a teleconference server and Identifying the intended participants of the teleconference, e.g., including the addresses of the participant communication devices. Addresses may include a phone number, fax number, or email address. Communication devices may include a cellular phone, landline phone, PDA or a computer. The teleconference server sends a teleconference notification message to each participant, which may be in the form of a voice message, text message and/or an email, depending on the targeted participant device. The notification message may include a unique access address to which the participants may call to join the teleconference immediately, or at a prescribed deferred time.

The initiating party is a subscriber of the teleconference server, thus the initiating device is compatible with the teleconference server. The teleconference server communicates with the intended participants using basic communication tools that are generally compatible regardless of the network that the recipient is subscribed to.

In one arrangement , a teleconference/group call initiator using an initiator device such as a cellular phone, personal digital assistant (PDA), portable computer, personal computer or landline phone instructs the teleconference server to initiate the teleconference call. The instruction may include the identification and contact information concerning the group call participants. The teleconference server stores the information, creates and sends a notification message to the intended participant that she is invited to a teleconference. The notification message may be in the form of a SMS text message, voice call, or other means of notification that are network independent, or compatible over disparate networks.

The notification message includes a unique access address associated with the group call. Different unique access addresses are associated with different group calls. In one arrangement, the unique access address may contain a phone number the participant can call to join the group call. The teleconference server authenticates the caller to be the intended participant based on the called number and/or the Caller ID of the caller, and permits the caller to join the group call that had been associated with the unique access address. In another arrangement, the notification message may contain a link to a specific location such as a website where a conference call may be conducted based on Voice over IP (VoIP). A participant may use devices (e.g., a phone) to join into the conference call, which may be different from the device (e.g., a pager) that received the notification message, particularly where the notification-receiving device may not be compatible with telephony.

The present invention is particularly suitable for use in cellular communication systems.

In one arrangement the notification message may be in the form of a prompt, which asks a participant if he would like to join the teleconference. If the participant affirms he wishes to join the teleconference, he is automatically connected to the teleconference. An affirmation can include saying "yes" into his phone, or pressing a specified button on his phone that corresponds to the prompt.

In another arrangement the teleconference server implements presence management to determine if a participant is present at a particular participant device at the time of initiating the teleconference. If a participant is not present, a teleconference notification message will not be sent to that particular participant device. This embodiment is also useful when establishing a teleconference that is to be conducted the time of initiation.

### BRIEF DESCRIPTION OF THE DRAWINGS

FIG. 1 is a schematic representation of a messaging network through which a sender transmits a data file from a sender device to a recipient device according to one embodiment of the present invention.
FIG. 2 is a schematic representation of a messaging network through which a sender transmits a data file from a sender cellular phone to a recipient cellular phone according to one embodiment of the present invention.
FIG. 3 is a schematic representation of one embodiment of a communications network through which the messaging method and system of the present invention may be implemented.
FIG. 4 is a schematic representation of one embodiment of a computer system that facilitates the messaging method, and system of the present invention.
FIG. 5 is a schematic representation of a messaging server and a voice recognition device according to one embodiment of the present invention.
FIG. 6 is a schematic representation of a messaging server that associates a data file with an address of a recipient device according to one embodiment of the present invention.
FIG. 7 is a flowchart illustrating a method for transmitting a data file from a sender device to a recipient device according to one embodiment of the present invention.
FIG. 8 is a schematic representation of a messaging server according to one embodiment of the present invention.
FIG. 9 is a schematic representation of a teleconference network through which an initiator and participants communicate according to one arrangement.
FIG. 10 is a schematic representation of a prompt according to one arrangement.
FIG. 11 is a schematic representation of one arrangement of a teleconference network through which an initiator and participants communicate where a participant device includes a cellular phone, landline phone and a computer, according to one arrangement.
FIG. 12 is a schematic representation of a participant Interface according to one arrangement.
FIG. 13 is a schematic representation of a teleconference server and a voice recognition device according to one arrangement.
FIG. 14 is a schematic representation of one arrangement of a computer network through which teleconference server may be implemented.
FIG. 15 is a schematic representation illustrating the configuration of different teleconferences with different teleconference groups and unique access addresses.

### DESCRIPTION OF THE ILLUSTRATED EMBODIMENTS

The present description is of the best presently contemplated modes of carrying out the invention. This description is made for the purpose of illustrating the general principles of the invention and should not be taken in a limiting sense. The scope of the invention is best determined by reference to the appended claims.

### Data File Transfer

The present invention is directed to a method and a system for communicating data files across a single or multiple communication networks. To facilitate an understanding of the principles and features of the present invention, they are explained herein below with reference to its deployments and implementations in illustrative embodiments. By way of example and not limitation, the present invention is described herein-below in reference to examples of communicating messages containing information or data file over cellular networks, such as voice messages and multimedia data files.

The present invention can find utility in a variety of implementations without departing from the scope of the claims herein, as will be apparent from an understanding of the principles that underlie the invention. It is understood that the messaging concepts of the present invention may be applied to business and personal communications, and may be implemented by commercial as well as private communication networks.

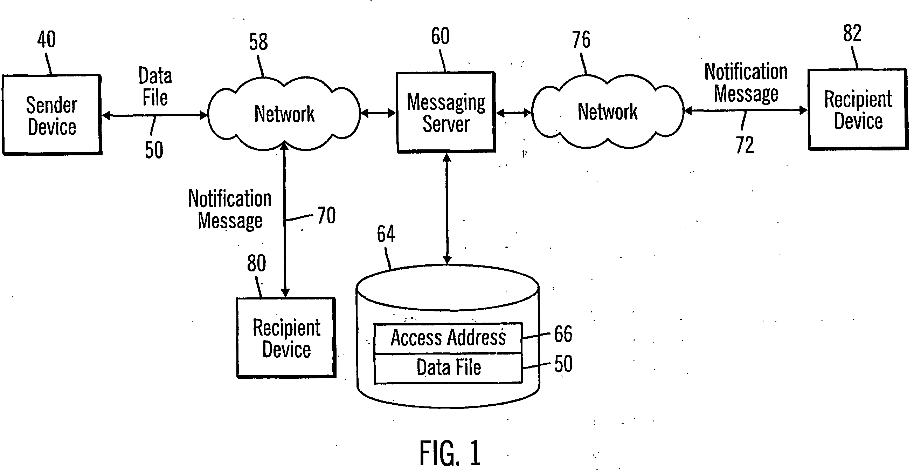

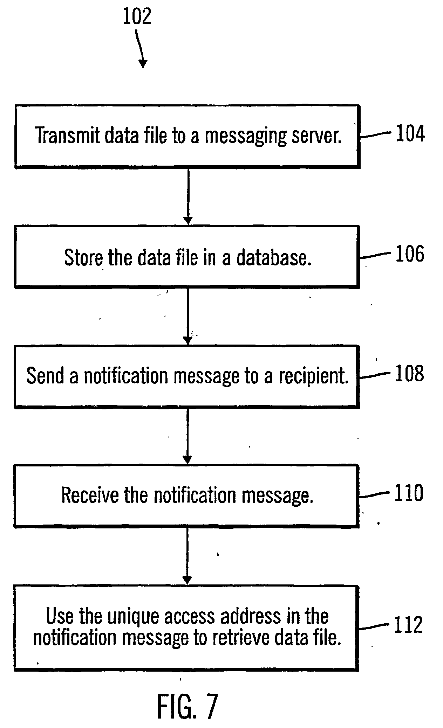

Fig. 1 is a diagram illustrating an embodiment of the present invention where a sender device 40 transmits a data file 50 to a recipient device 80, 82. FIG. 7 is a flow diagram 102 illustrating the steps in this embodiment. The sender 40 transmits (at step 104) via communications network 58 the data file 50 to a messaging server 60, along with the intended recipient's notification address (e.g., cellular phone number, landline phone number, email address, instant message ID, etc.). The network 58 may include cellular network, telephony network (e.g., landline or PSTN), data network, Internet, or other types of communications networks. The sender 40 may specify more than one recipient of the same data file. The messaging server 60 stores (at step 106) the data file 50 in a database 64 and sends (at step 108) a notification message 70, 72 to the recipient 80, 82, respectively, based on the recipient's notification address. Depending on the network the recipient is subscribed to, the recipient 80, 82 may be sent the notification message 70, 72 through the same network 58 as the sender 40, or through a different network 76, respectively. The notification message 70, 72 contains a unique access address 66, which is assigned to be associated with the data file 50. The notification message 70, 72 may also include message ID, name of data file, sender's identification, size of message, date and time of message, and other relevant information, which may be provided by the sender or the system (e.g., time and date). The notification message 70, 72 usually do not include any substantive part of the content of the message or data file, to avoid exceeding the notification messaging limitation. Although in one embodiment of the present invention, content of the message or data file is sent as an attachment to the notification to the recipient device, depending on the capabilities of the device. The recipient 80, 82 receives (at step 110) the notification message 70, 72 and using the unique access address 66 retrieves (at step 112) the data file 50. The unique access address may be an access address to contact the messaging server 60. The unique access address may include a phone number and/or web address. The network through which the notification message is sent to the recipient may be different from the network through which the message is retrieved by the recipient.

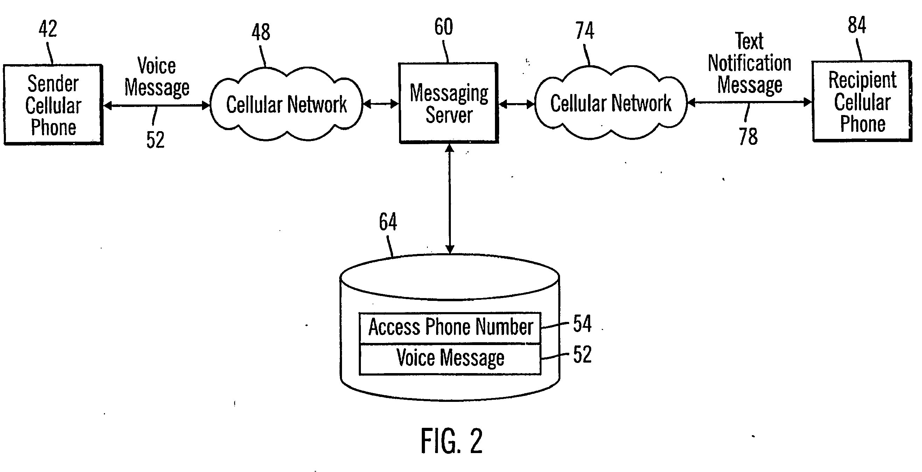

Fig. 2 is a diagram illustrating an embodiment of the present invention where a sender device is a cellular phone 42 that transmits a voice message 52 to a recipient device 84 that is also a cellular phone. (Other embodiments, not shown, may include sending data files over the Internet network, to recipient devices such as PDAs and PCs.) The sender cellular phone 42 transmits the voice message 52 to a messaging server 60. The messaging server 60 stores the voice message 52 in a database 64 and sends a notification text message 78 to recipient cellular phone 84. The recipient cellular phone 84 may be sent the notification text message 78 through the same network 48 as the sender cellular phone, or through a different network 74 depending on the recipient's network. In one embodiment, the recipient network may be different than the network of the sender, with respect to, for example, communication protocol, operating frequency, operating platform or other operational and/or functional aspects that render the sender and recipient networks incompatible for direct messaging of the sender's data file.

The notification text message 78 contains a unique access phone number 54 that is assigned to be associated with the voice message 52. The recipient cellular phone 84 receives the notification text message 78 and calls the unique access phone number 54 to retrieve her voice message 52. In one embodiment, the access phone number may not be visible to the recipient, but rather, is associated with a menu prompt. The access phone number is dialed if the recipient responds by pressing a specified button on the menu prompt on the recipient cellular phone.

In one embodiment, the messaging server 60 identifies the unique access address used by the recipient device through a dialed number identification service (DNIS). The DNIS may be provided by the telephony network used by the recipient to retrieve her data file. The network may also provide the access phone number by transmitting DTMF tones to the messaging server 60 from a local central office. The messaging server 60 selects the data file from the mass storage device that is associated with the unique access address and then transmits such corresponding data file to the recipient.

In addition or in the alternate, the caller to the messaging server may be requested to authenticate herself as the intended recipient upon access to the messaging server 60. This is to provide additional security in case a person who is not the intended recipient was to intentionally impersonate the recipient by dialing the unique access number associate with data file from the sender, or was to accidentally dial such unique access number. The authentication process may involve the caller having to input the intended recipient's notification address (e.g., the recipient's cell phone number) and/or personal identifying information such as one or more of name, user ID, unique personal identification number code (PIN code). The messaging server 60 authenticates the caller as the intended recipient upon matching the unique access number to the callers authenticating information (e.g., recipient's cell phone number, PIN, etc.). In another embodiment, the messaging server 60 may be configured to authenticate the caller as the intended recipient if the caller's Caller ID (or Automated Number Identification "ANI") matches the recipient notification address. In such embodiment, the recipient must be calling from the same device as the notification address. In another embodiment, the recipient may use a different device to retrieve a data file sent by the sender. For example, the data file is a "relatively large multi-media file, an the recipient's cellular device notified by the messaging server 60 is not compatible to download a file of that size and/or a multimedia file. The recipient can well use a PDA or PC to contact the messaging server 60 at the assigned unique access address to download the large multimedia file.

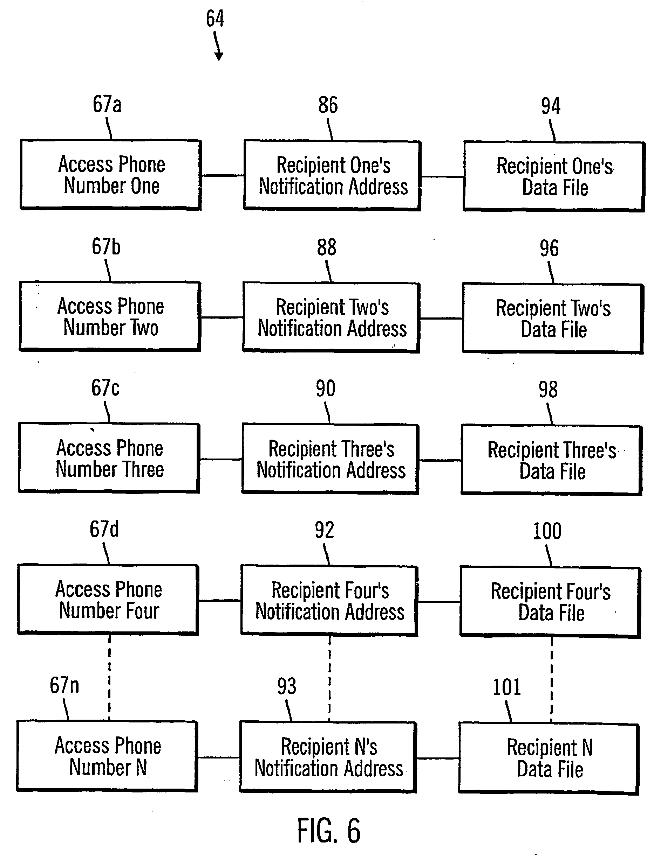

Fig. 6 illustrates the situation in which one or more senders send different message data files to more than one intended recipients. In this embodiment, a database 64 associates a data file 94, 96, 98, 100, 101 with the addresses of 86, 88, 90, 92, 93 of different recipients, respectively. A plurality of data files 94, 96, 98, 100, 101 are associated with a plurality of recipient notification addresses 86, 88, 90, 92, 93 and each recipient notification address 86, 88, 90, 92, 93 is associated with a single unique access address (e.g., access phone numbers 67a, ..., 67n), respectively. Specifically, recipient one's data file 94, recipient two's data file 96, recipient three's data file 98, recipient four's data file 100 and recipient n's data file 101 are also associated with recipient one's notification address 86, recipient two's notification address 88, recipient three's notification address 90, recipient four's notification address 92, and recipient n's notification address 93, respectively. In addition, recipient one's data file 94, recipient two's data file 96, recipient three's data file 98, recipient four's data file 100 and recipient n's data file 101 are also associated with recipient one's unique access address 67a, recipient two's unique access address 67b, recipient three's unique access address 67c, recipient four's unique access address 67d, and recipient n's unique access address 67n, respectively.

When a recipient retrieves her data file (one of 94, 96, 98, 100, 101) using one of the unique access addresses 67a to 67n, the recipient notification address 86, 88, 90, 92, 93 and the unique access address dialed are identified by the messaging server 60, and the messaging server 60 offers the corresponding recipient data file 94, 96, 98, 100, 101, respectively, to the recipient. In this embodiment, it is contemplated that the recipient device receiving the notification message is the same device that retrieves the data file, so the recipient's device address can be automatically determined by Caller ID or ANI. If the recipient uses a different device to retrieve the data file, the messaging server 60 may require additional authentication procedure as describe above.

In the event the sender wishes to send the same data file to more than one recipients (e.g., sending the data file to a distribution list of recipients), the messaging system 60 can be configured to send the same notification message with the same unique access address associated with the same data file to the multiple recipients. In this case, to send the same data file to n recipients, the unique addresses 67a-67n would be the same, and the recipient data files 94, 96, 98,100 and 101 would be the same. Only one copy of the data file is required to be maintained by the messaging server 60, which may be accessed by multiple recipients. Alternatively, each recipient may be assigned a unique access address even for the same data file.

The messaging server may resend the notification message if the data file is not retrieved within a predetermined period of time. In one embodiment, a notification message is not sent while the sender is accessing the messaging server, but rather, is queued for later delivery, depending on a number of factors, such as (a) available bandwidth; (b) priority of the message designated by the sender; (c) whether the recipient address involves a long distance call; (d) whether recipient is in the same network as the sender; and any other relevant factors. In another embodiment, the notification message is sent immediately once the recipient's contact information is known, and the message completed.

The notification message may comprise in addition to, or alternatively to, a text message, a voice message and/or an electronic mail. A voice notification message is typically used where the recipient is to be notified through a landline phone that cannot receive a text message. The messaging server 60 dials the recipient's landline phone through a PSTN and transmits an audible voice notification message that provides an access phone number with which the recipient can dial to hear her voice message. In addition, the messaging server 60 may auto-connect the recipient to the access phone number, as explained elsewhere herein. The recipient device 40 may comprise a cellular phone, a PDA and/or portable computer, a landline phone and a personal computer. The unique access address may comprise a phone number and/or a website address. In one embodiment, the notification message provides a website address where the data file can be downloaded, and in one embodiment, the website address may appear in a text notification message and/or a voice notification message.

In another embodiment, if the sender wishes to provide redundancy, and if the intended recipient has more than one device to which notification messages may be sent, the sender may elect to have the messaging server 60 send a notification message to more than one recipient device. After the recipient retrieved the message associated with the notification message, a cancellation message is sent by the messaging server 60 to all the recipient devices that earlier received message notification, to avoid the recipient the inconvenience of attempting to retrieve a message that has already been retrieved.

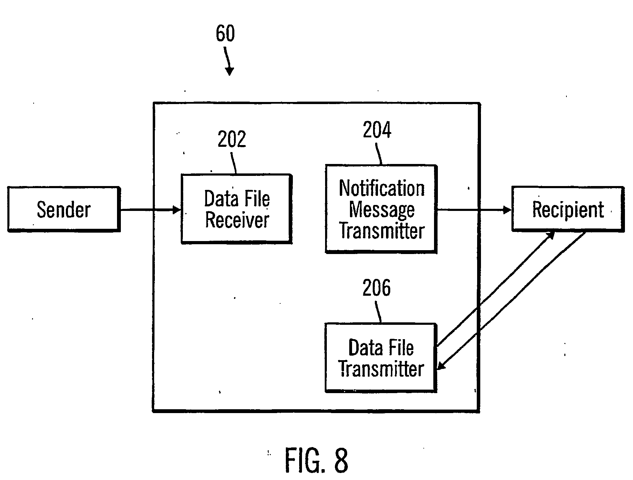

Referring to Fig. 8, the messaging server 60 may comprise a data file receiver 202 for receiving the data file from the sender device, a notification message transmitter 204 for "transmitting the notification message to the recipient, and a data file transmitter 206 for transmitting the data file to the recipient upon the recipient access of the messaging server 60. Example of a notification message transmitter 204 include a module or an interface to short message service center (SMSC) gateway server or short message peer to peer (SMPP) gateway server, interfaces to email servers using standard protocols such as POP3/IMAP4, SMTP as well as proprietary protocols such as MAPI/CDO, and interfaces to voice mail systems or direct dialing over PSTN or IP network. An example of a data file receiver includes a module that accommodates sending data file from the sender device to the messaging server over circuit-switched or packet switched network, over protocols such as HTTP, SMS, MMS, etc. An example of a data file transmitter includes a module that accommodates sending data file from the message server to the recipient device over circuit-switched or packet-switched network over protocols such as HTTP, SMS, MMS, etc. The messaging server 60 is illustrated as being in communication with a network, but may also be integrated with a network, for example the cellular network of the sender.

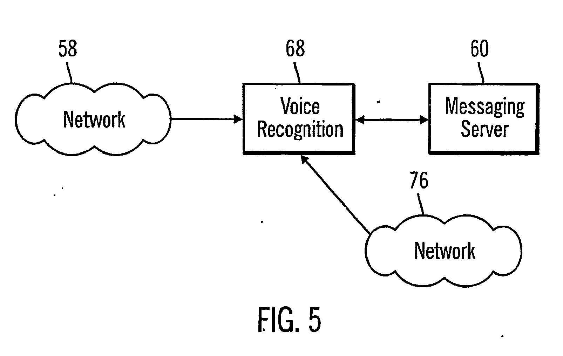

Referring to Fig. 5, in an embodiment, the messaging server 60 is configured with a voice-recognition unit 68 implementing voice-recognition processing. An example of voice-recognition processing includes a suite of Voice Manager Products developed by HeyAnita Inc. of Burbank, CA Reference is also made to U.S. Patent Publication No. US 20030078779A1, assigned to the assignee of the present invention, which discloses an interactive voice response system.

Another example of voice-recognition programming is disclosed in U.S. Patent No. 6,501,966 to Bareis et. al. In this embodiment, the sender may pre-program contact information including a recipient's name and phone number, and associate the phone number with a recipient's name. When sending a message, the sender may speak the name of the recipient and the messaging server 60 will identify the recipient's contact information using the voice-recognition unit 68. If the recipient's phone number has not been pre-programmed, the sender may speak the recipient's phone number, and the messaging server will identify the recipient's phone number using the voice-recognition unit 68. Examples of commands that may be implemented by DTMF recognition and/or voice-recognition include, but are not limited to, dialing, web browsing, calling, bringing up a contact list, adding a contact, removing a contact, stopping a call, entering additional recipient phone numbers, etc.

The sender may indicate the recipient or recipients of the data file using the sender device. In one embodiment, the sender inputs the recipient device address into a sender device, such as a cellular or landline phone. The messaging server detects the recipient device address using dual tone multi frequency DTMF recognition, voice recognition, and/or over IP-based network. DTMF and voice recognition may also be used to navigate a menu to interact with the messaging server and to select a recipient device address that has been pre-programmed into the messaging server.

Further, the sender may have access to an address book stored on the messaging server 60 or on a sender device. In one embodiment, a global address book lists the names and contact information of all subscribers to the messaging server. The contact information can include, but is not limited to, phone numbers and electronic mail addresses. A sender may also choose to create his own personal address book which lists only the contact information of people the sender has placed in the address book. Often a sender may send a data file to a new recipient who is not listed in an address book. When the sender sends the new recipient a data file the messaging server detects whether the contact information of the new recipient is contained within an address book. If the new recipient's contact information is not present in an address book, the messaging server prompts the sender to add the new recipient's contact information.

A sender may also group recipients into a distribution list where the sender need only select the distribution list as the recipient to send a data file to each member of the distribution list. Each member of the list may have different types of recipient devices. Also, a distribution list may be created that sends a data file to multiple devices of a single recipient.

In another embodiment the present invention, the messaging server 60 communicates with the sender device, and downloads the contact information of recipients stored in the sender device. The contact information is then placed within an address book. For example, a cellular phone may have a memory card (such as a SIM card) that functions as a memory device for storing contact information. The SIM card allows the user of the cellular phone to add and delete contact information. The messaging server may download the contact information contained in the SIM card. In this embodiment of the invention, a user of the cellular phone may make changes to the contact information on the SIM card, and these changes would be reflected on the address book contained at the messaging server and vice versa. To keep the contact information of the sender updated, the messaging server may periodically query the cellular phone or the cellular phone may transmit changes in its SIM card to the messaging server each time changes are made to the stored contact information.

Referring again to FIG. 1, the sender device 40 may comprise in addition to a cellular phone, a PDA and/or portable computer, a fixed device such as a landline phone and a personal computer. Each sender device 40 may transmit different types of data files 50 over different types of networks, collectively represented by network 58. A data file 50 can include, but is not limited to, analog and digital voice messages, text files, image files, executable files, music files, audio files, video files, multimedia files, and voice over Internet protocol (VOIP) transmissions. Different types of networks (58, 76) include cellular networks, wide area networks such as the Internet, local area networks, telephony networks and PSTN's. Examples of different sender devices using different networks include a portable computer transmitting a voice message over a cellular network to the messaging server 60. The personal computer may transmit a text message and/or a voice message over a data network such as the Internet. The personal computer may use a voice over Internet protocol (VOIP) to transmit the voice message. The landline phone may transmit a voice message to the messaging server through a PSTN.

Similarly, the recipient's device 82 may comprise in addition to a cellular phone, similar devices as the sender device 40 noted above.

In one embodiment, the sender device may be enabled to capture audio, video and/or multimedia files, and transmitting them over IP or PSTN network to the message server. This transmission can occur using store-and-forward or streaming. This can occur over variety of protocols such as SMS, HTTP, MMS etc. Similarly, the files may be sent to the recipient device from the message server over IP or PSTN network. This transmission can occur using store-and-forward or streaming. This can occur over variety of protocols such as SMS, HTTP, MMS etc.

In one embodiment, a data file such as a voice message may be created by converting a text message to a voice message. A text message is provided to the messaging server 60 via the sender device 40 and the text message is converted to a voice message using a text-to-speech conversion process known in the art. With text-to-speech conversion, the text message is converted to audible sounds, allowing the recipient to hear the text message as a voice message. The text message may be converted to a voice message by the sender device 40 or may be converted by the messaging server 60. In one exemplary embodiment, a sender using a cellular phone wishes to send a text message to a recipient, but the recipient only has access to a landline phone that is not able to receive the text message. The sender sends a text message to the messaging server 60. The text message is converted to a voice message using a text-to-speech conversion process, so that the recipient can retrieve the voice message converted from the text message using the landline phone.

In another embodiment, a sender may send a data file in the form of a text message to a recipient using the messaging server 60. However, the sender wishes to dictate the text message. A speech-to-text processing may be used to convert the sender's speech into a text message. The speech-to-text processing may be enabled at the sender device or may be performed by the messaging server.

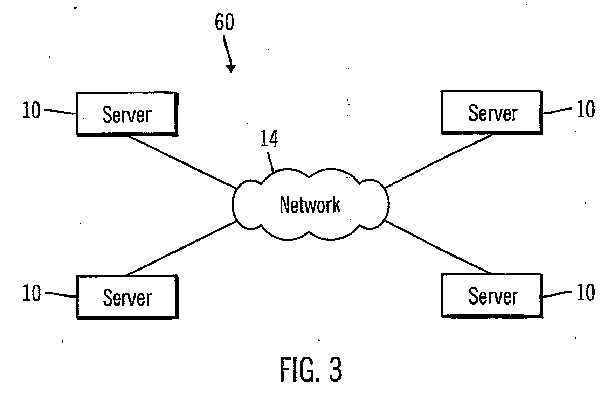

Referring to Fig. 3, in one embodiment, the messaging server 60 comprises many servers 10 that are inter-connected via a communication network 14, such as a landline telephone network or an IP network, with each server 10 having the full functionality of a messaging server as described above, however each serving a different geographical region, for example. Details of various hardware and software components comprising the communication network 14 are not shown (such as servers, routers, gateways, etc.) as they are well known in the art. Further, it is understood that access to the communication network 14 by the servers 10 may be via suitable transmission medium, such as coaxial cable, telephone wire, wireless RF links, or the like. Communication between the servers 10 takes place by means of an established protocol. Depending on the recipient's device location, the messaging server 60 may provide a unique access address in the message notification to the recipient, which is directed to retrieve the sender's message from a server 10 located in the same region as the recipient's device. For example, a sender can forward a voice message to a recipient in another country. The message server 60 would determine the country based on the recipient address specified by the sender, and route the sender's voice message to a server 10 that serves that country. Upon notification, the recipient could simply retrieve the sender's voice message from the server 10 that is located in his local region, instead of making a long distant call to a messaging server located in another country or region. In one embodiment, if the connectivity is IP-based, the message is retained on the originating server and is retrieved over IP by the destination server at runtime. This ensures that only one copy of the message is maintained on a server when the same message is sent to multiple recipients. The sender's voice message may be routed to the local server in another country via an IP network, telephony network, a broadband network, etc. The notification message to the recipient may be sent via a different network, such as a cellular network.

### Teleconference Sever

The present invention is directed to a method an system for establishing a teleconference. To facilitate an understanding of the principles and features of the present invention, they are explained herein below with reference to its deployments and implementations in illustrative embodiments. By way of example and not limitation, the present invention is described herein-below in reference to examples of communication over a single or multiple networks and, more particularly, a method and system is disclosed for initiating a conference call via a cellular network.

The present invention can find utility in a variety of implementations without departing from the scope of the claims herein, as will be apparent from an understanding of the principles that underlie the invention. In particular, the present invention provides a system and process that works seamlessly across different incompatible telephony networks. Some of the telephone services are carrier, provider, network or platform dependent (collectively referred hereinafter as network dependent, as opposed to network independent), and some are user device dependent. Network dependent refers to telephony services that would work in one network (e.g., carrier, provider, platform or physical network) but not another, because of differences in operating parameters, specification, limitations, and other characteristics among the different carriers, providers, platforms or physical networks. Such differences may include incompatibilities arising from underlying technologies, communication frequencies, communication platform which may be viewed as the underlying hardware and software that handles communication over a network, communication protocol which may be viewed as the way data is exchanged among user devices, or simply the physical or operational restrictions network providers and carriers imposed to distinguish their services.

It is understood that the teleconferencing concepts of the present invention may be applied to business and personal communications, and may be implemented by commercial as well as private communication networks.

The teleconferencing aspect of the present invention shares some basic architecture and functionality as the system and method disclosed above in connection with data file transfer. For the present invention, the teleconference server essentially parallels many of the functions of the messaging server in the copending application. Generally, an initiator of a teleconference sends a request or instructions to the teleconference server (e.g., participant identification). The teleconference server communicates with the intended participants using basic communication tools that are generally compatible regardless of the network that the participants is subscribed to. The teleconference server stores the information, creates and sends a teleconference notification message to the intended participant a she has been invited to a teleconference. The notification message includes a unique access address associated with the teleconference, at which the participants can access to join the teleconference at the prescribed time. Different unique access addresses are associated with different teleconferences. Accordingly, instead of handling the transfer of data files from a sender to a recipient using a messaging server, the teleconferencing aspect of the present invention uses a teleconference server to handle the establishment of a teleconference, using a similar notification messaging function to facilitate the intended participants'/recipients' access to participate in the teleconference. Further similarities and distinctions are disclosed below.

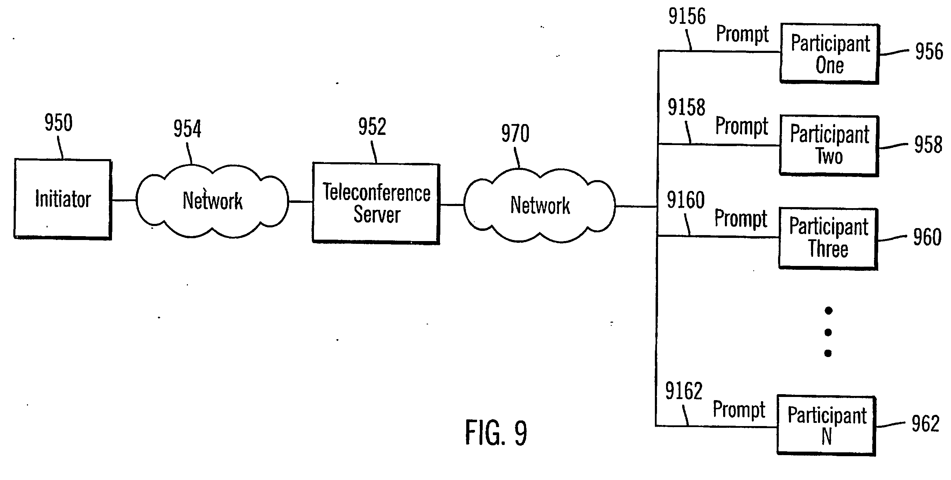

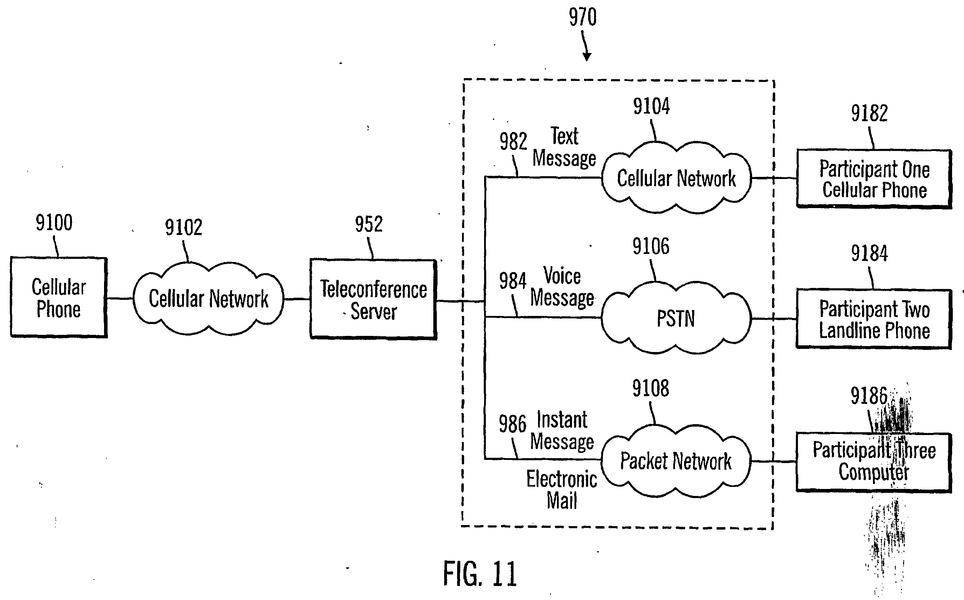

Fig. 9 is a diagram illustrating an arrangement where an initiator 50 communicates with a teleconference server 952 over a network 954 to establish a teleconference with multiple participants 956, 958, 960, 962. The network 954 may include cellular network, telephony network (e.g., landline or PSTN), data network, Internet, or other types of communications networks. The initiator 950 identifies to the teleconference server 952 which participants 956, 958, 960, 962 he wishes to invite as part of the teleconference, along with the intended participant's notification address (e.g., cellular phone number, landline phone number, email address, etc.) The initiator 950 may identify a participant by using the name to retrieve the corresponding address of the participant stored in a database at the teleconference server 952. A teleconference notification message, for example, a prompt 9156, 9158, 9160, 9162 is transmitted to each participant 956, 958, 960, 962 by the teleconference server 952 over a network 970 whereby each participant 956, 958, 960, 962 may join the teleconference by accepting the prompt 9156, 9158, 9160, 9162. Depending on the networks the participants are subscribed to, the participants may be sent the notification message through the same network 954 as the initiator 950, or through a different network 970 (which may comprise different types of communications networks; see also Fig. 11), respectively. The notification message contains a unique access address, which is assigned to be associated with the specific teleconference. The notification message may also include teleconference ID, initiator's identification, date and time of teleconference, expected duration of the teleconference, other participants, agenda, and other relevant information, which information may be provided by the initiator, or by the system (e.g., time and date). The participants read the notification message and using the unique access address assigned to access to join into the teleconference at the prescribed time. The unique access address may be an access address to contact the teleconference server 60. The unique access address may include a phone number and/or web address for VolP telephony. The network through which the notification message is sent to a participant may be different from the network through which the participant accesses the teleconference.

In one arrangement, the communication channel between the initiator and the teleconference server is terminated after the initiator identifies the participants. Once a participant accepts a prompt, a teleconference channel is established between the participant and the teleconference server. The teleconference server then communicates with an initiator device and the initiator device is joined on the teleconference channel with the participant. In another aspect of this arrangement, the communication channel between the initiator and the teleconference server remains active after the initiator identifies the participants. This communication channel becomes the teleconference channel, and participants who join the teleconference join the teleconference channel upon acceptance of the prompt.

Fig. 11 is a diagram illustrating an arrangement where initiator device is a cellular phone 9100 that transmits instructions to the teleconference server 952 to notify the participant devices, including participant cellular device 9182. The teleconference server 952 sends a notification text message 982 to participant cellular phone 9182. The participant cellular phone 9182 may be sent the notification text message 982 through the same network 9102 as the initiator cellular phone, or through a different network 9104 depending on the participant's network. In one arrangement, the participant network may be different than the network of the initiator, with respect to, for example, communication protocol, operating frequency, operating platform or other operational and/or functional aspects that render the initiator and participant networks incompatible for direct messaging of the initiator's teleconference notification.

The notification text message 982 contains a unique access phone number that is assigned to be associated with the teleconference. The participant cellular phone 9182 receives the notification text message 982 and calls the unique access phone number to participate in the scheduled teleconference. In one arrangement, the access phone number may not be visible to the participant, but rather, is associated with a menu prompt. The access phone number is dialed if the participant responds by pressing a specified button on the menu prompt on the participant cellular phone, as further explained below.

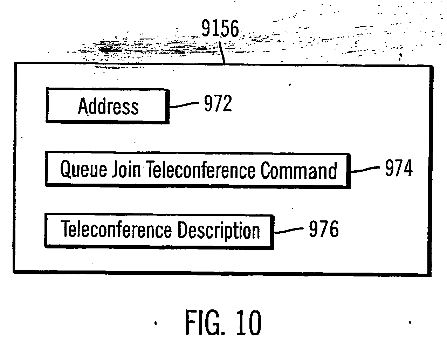

Referring to FIG. 10, in one arrangement, a prompt 9156 contains an address 972 to a communication channel used by the teleconference. The prompt also contains an executable command 974 that queues a participant's device to communicatively connect with the teleconference channel. The prompt 9156 may also contain a message 976 that contains a teleconference description including information such as the identity of the teleconference participants and the topic of the teleconference. The prompt 9156 may be communicated in different formats including a text message, an audible message, instant message and electronic mail. An example of an instant message system is America Online Instant Messenger. The participants may use a plurality of devices to engage in the teleconference. Devices may include a cellular phone, a personal digital assistant (PDA), a landline phone and a personal computer. Each participant device may receive a prompt in a different format, depending on the capability of the device.

In addition or in the alternate, participants may communicate commands to the teleconference server using, but not limited to, voice commands, dual tone multi frequency (DTMF) inputs via a phone handset, such as a cellular phone or landline phone, or via a web based interface, using input devices such as a keyboard and mouse.

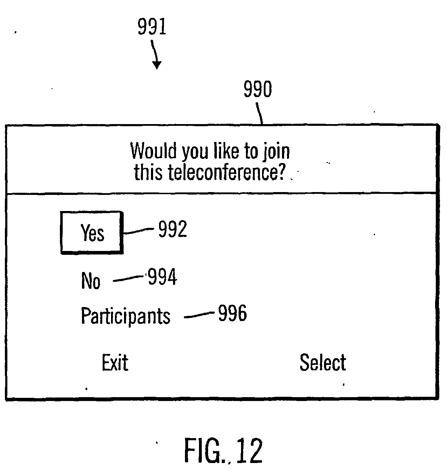

Referring again to FIG. 11, in one arrangement, a prompt is sent to communication devices of each invited participants to the teleconference. In one aspect of this arrangement,the prompt is a text message 982 transmitted to a cellular phone 9182 over a cellular network 9104. The text message contains an executable queue, that if accepted, instructs the cellular phone to dial the address of the teleconference, whereby the cellular phone joins the communication channel of the teleconference. In this arrangement, the initiator device is a cellular phone 100 that communicates with the teleconference server 952 over a cellular network 9102. FIG. 12 illustrates a display screen 991 on cellular phone 9182 that has a message 990 that asks the participant if she would like to join a teleconference. The participant can select yes 992 to join the teleconference, or no 994, to abstain from the teleconference. The menu also allows a participant to view a list of the invited participants 996. The exact format of this display will vary depending on the device capabilities.

Still referring to FIG. 11, in another aspect of this arrangement, the prompt sent to a participant is a voice message 984. A voice message 984 is typically used where the participant cannot receive a text message, for example, a landline phone 9184, but may also be an alternate means of notification even if the participant can receive a text message. The teleconference server 952 dials a participant's landline phone 9184 through a public-switched telephone network (PSTN) 9106, establishes a voice communication channel with the landline phone 9184, and transmits an audible voice notification message 984 that the participant has been invited to join a teleconference. A voice menu is offered to the participant, whereby she can use voice commands (discussed infra) or DTMF responses to interact with the menu. To join the teleconference, the participant responds affirmatively to a voice prompt which asks whether the participant wishes to join the teleconference. When the participant affirms she wishes to join the teleconference, her affirmation activates a queue stored on the teleconference server to bridge the voice communication channel between the landline phone and the teleconference server, with the teleconference communication channel.

In yet another arrangement, the prompt is an electronic mail or instant message 986 that is sent over a data network 9108 such as the Internet to a participant's computer 9186. The electronic mail or instant message 986 contains an executable command that the participant can use to join the teleconference. The executable command contains an address that may be a web address through which the participant can join teleconference using a VoIP connection. Alternatively, the address may be a phone number that the participant can call to connect through a PSTN or cellular network.

In one arrangement, the teleconference server 952 identifies the unique access address used by the participant device through a dialed number identification service (DNIS). The DNIS may be provided by the telephony network used by the participant to join in the teleconference. The network may provide the access phone number by transmitting DTMF tones to the teleconference server 952 from a local central office. The teleconference server 952 connects the caller to the conference call that is associated with the unique access address.

In addition or in the alternate, the caller to the teleconference server 952 may be requested to authenticate herself as the intended participant upon access to the teleconference server 952. This is to provide additional security in case a person who is not the intended participant was to intentionally impersonate the participant by dialing the unique access number associate with the teleconference all initiated by the initiator 950, or was to accidentally dial such unique access number. The authentication process may Involve the caller having to input the intended participant's notification address (e.g., the participant's cell phone number) and/or personal information such as a unique personal identification number (PIN) code. The teleconference server 952 authenticates the caller as the intended participant upon matching the unique access number to the callers authenticating information (e.g., participant's cell phone number, PIN, etc.). In another arrangement,the teleconference server 952 may be configured to authenticate the caller as the intended participant if the caller's Caller ID (or Automated Number Identification "ANI") matches the participant's notification address. In such arrangement, the participant must be calling from the same device as the notification address. In another arrangement, the participant may use a different device to participate in the conference call. For example, the notification address is the email address or the pager number of the participant, and the participant wishes to use participant's cellular device to participate in the conference call, where the pager or the user device that retrieved the email notification are not compatible with telephony.

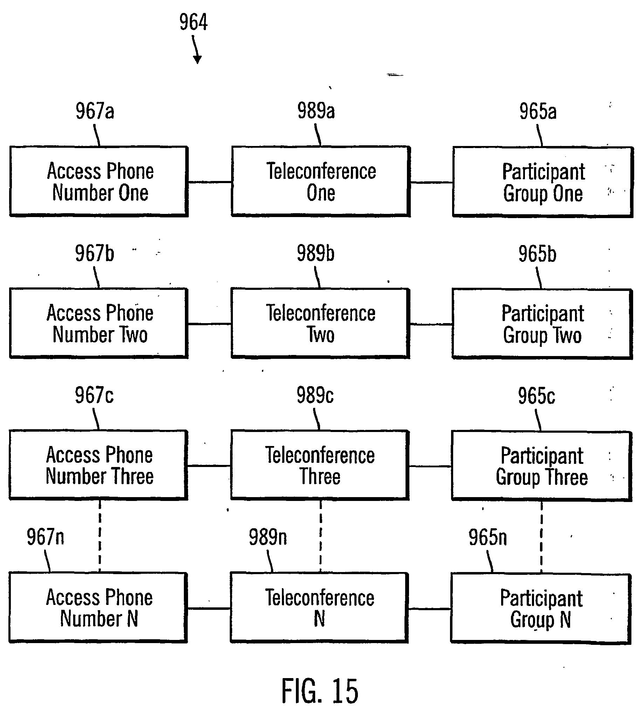

Fig. 15 illustrates the situation in which one or more initiators initiate different teleconferences to more than one group of intended participants. In this arrangement ,the teleconference server 952 associates each of teleconferences 989a to 989n with a unique access address (e.g., access phone numbers 67a to 67n), respectively. The plurality of participant groups 965a to 965n are each associated with the respective conference groups 989a to 89n and each participant group is associated with a single unique access address (967a, ..., 967n), respectively. The participant groups 967a to 967n are each defined by a plurality of teleconference notification addresses corresponding to the participants in the group.

When a participant in a group accesses using the corresponding assigned unique access address 967a to 967n to join the teleconference, the unique access address dialed and/or the participant's notification address are identified by the teleconference server 952 to determine the corresponding teleconference 989a to 989n, and the teleconference server 952 directs the participant to the corresponding teleconference 989a to 989n. In this arrangement,it is contemplated that the participant device receiving the notification message is the same device that is used to participate in the teleconference, so the participant's device address can be automatically determined by Caller ID or ANI. If the participant uses a different device to participate in the teleconference, the teleconference server 952 may require additional authentication procedure as describe above.

The teleconference server 952 can be configured to send the same notification message with the same unique access address associated with the same teleconference to the multiple participants as in the arrangement above, or assign a different unique access address for different participants of the same teleconference.

The notification message may comprise in addition to, or alternatively to, a text message, a voice message and/or an electronic mail. A voice notification message is typically used where the participant is to be notified through a landline phone that cannot receive a text message. The teleconference server 952 dials the participant's landline phone through a PSTN and transmits an audible voice notification message that provides an access phone number with which the recipient can dial to join the teleconference. The teleconference server may also offer the recipient to be auto-connected to the conference. The participant receiving device may comprise a cellular phone, a PDA and/or portable computer, a landline phone and a personal computer. The unique access address may comprise a phone number and/or a website address for VolP teleconferencing. In one arrangement, the website address may appear in a text notification message and/or a voice notification message.

In another arrangement, if the teleconference initiator wishes to provide redundancy, and if an intended participant has more than one device to which notification messages may be sent, the initiator may elect to have the teleconference server 952 send a notification message to more than one participant device. After the participant joined into the teleconference associated with the notification message and/or once the teleconference has concluded, a cancellation message is sent by the teleconference server 952 to all the participant devices that earlier received teleconference notifications, to avoid the participant the inconvenience of attempting to access a teleconference that has already concluded.

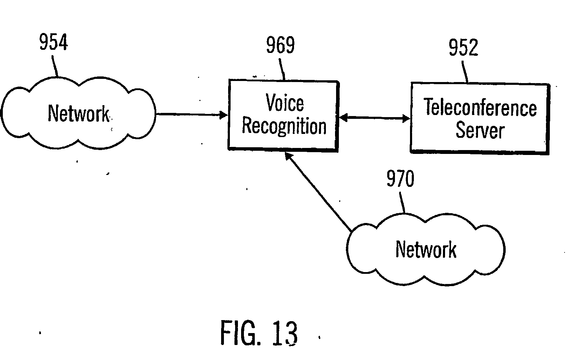

Referring to FIG. 13, in an arrangement, the teleconference server 952 is configured with a voice-recognition unit 969 implementing voice-recognition processing. An example of voice-recognition processing includes a suite of Voice Manager Products produced by HeyAnita, Inc. of Burbank, CA. Another example of voice-recognition programming is disclosed in U.S. Patent No. 6,501,966 to Bareis et al.

Other examples of voice-recognition applications include Voice extensible markup language (VXML) compliant products. In this arrangement, the initiator may pre-program contact information including a participant's name and device address, and associate the device address with a participant's name. When initiating the teleconference, the initiator may speak the name of a participant and the teleconference server 952 will identify the participant's contact information using the voice-recognition unit 969. If the participant's device address has not been pre-programmed, the initiator may speak the participant's address, and the teleconference server 952 will identify the participant's device address using the voice-recognition unit 69. Examples of commands that may be implemented by DTMF recognition and/or voice-recognition include, but are not limited to, dialing, web browsing, calling, bringing up a contact-list, adding a contact, removing a contact, stopping a call, entering additional participant addresses, putting one or more participants on hold during a teleconference, adding or removing participants during a teleconference.

In one arrangement, the teleconference server 952 implements presence management to analyze whether an invited participant is present with a participant communication device. Depending on the nature of the participant's presence, a participant device may be excluded from receiving a prompt. In one arrangement, presence management may determine if the participant is present at the participant device, and if the participant is not present, the participant device is excluded from being sent a prompt. For example, if the participant device is a computer, and presence management detects that the participant computer is not on, or the participant has not touched her keyboard for a period of time, then the participant is determined to not be present, and the computer will be excluded as a participant device. In another arrangement, the nature of the presence of the participant may be evaluated. For example, if the participant device is a cellular phone, and presence management detects that the cellular phone is moving, then it will be determined that the participant is present with the cellular phone as she is the one causing the cellular phone to move. However, the cellular phone may be excluded as a participant device, if for example, the participant prefers that she not be contacted by cellular phone while she is traveling. Example of presence management products include the Oz Instant Messaging and Presence Services Server, and the Oz Instant Messaging and Presence Services J2ME Client produced by OZ Communications, Inc of Montreal, Canada, presence solution products including Odigo Express and Odigo Messenger produced by Odigo Inc. and dynamicsoft Presence Engine produced by dynamicsoft Inc. of Parsippany, NJ.

The teleconference server may be a remote server that communicates with, or is integral with, a PSTN central office or a cellular network mobile switching center (MSC). The teleconference server may have a short message service centers (SMSC) gateway server and/or a short message peer to peer (SMPP) gateway server.

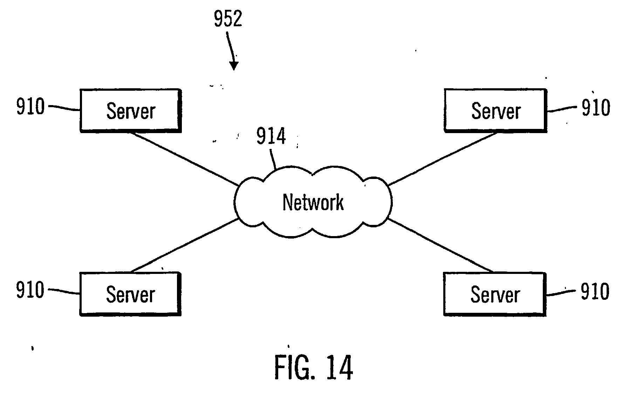

Referring to Fig. 14, in one arrangement, the teleconference server 952 comprises several servers 910 that are inter-connected via a communication network 914, such as a landline telephone network or an IP network, with each server 910 having the full functionality of a teleconference server as described above, however each serving a different geographical region, for example. Details of various hardware and software components comprising the communication network 914 are not shown (such as servers, routers, gateways, etc.) as they are well known in the art. Further, it Is understood that access to the communication network 914 by the servers 910 may be via suitable transmission medium, such as coaxial cable, telephone wire, wireless RF links, or the like. Communication between the servers 910 takes place by means of an established protocol. Depending on the participant's device location, the teleconference server 952 may provide a unique access address in the teleconference notification to the recipient/participant, which is directed to participate in the conference call by accessing a server 910 located in the same region as the participant's device. For example, an initiator can initiate a conference call with notification of a participant in another country. The teleconference server 952 would determine the country based on the participant address specified by the initiator, and route the teleconference notification message to a local server 910 that serves that country to be sent to the participant, and/or the access point to the conference call to the local server 910. Upon notification, the participant could simply join the conference call at the prescribed time via that server 910 that is located in his local region, instead of making a long distant call to a server located in another country or region. The notification message may be routed to the local server in another country via an IP network, telephony network including a cellular, a broadband network, etc.

In an alternate arrangement, an initiator may establish a teleconference using a web interface such as a web browser. Using the web interface the initiator may select participants for the teleconference. The selected participants are communicated to the teleconference server, which then sends a prompt or notification to the intended participants to join the teleconference. The teleconference may be monitored by a participant using the web interface including the status of which participant has joined the conference call.

Similar to the sender for the data file transfer aspect of the present invention described above, the initiator has access to an address book stored on the teleconference server 952 or on an initiator device. Similar disclosure is applicable here for using the address book to establish teleconference. An initiator may also group participants into a distribution list where the initiator need only select the distribution list as the participant to send a prompt to each member of the distribution list. Each member of the list may have different types of participant devices. Also, a distribution list may be created that sends a prompt to multiple devices of a single participant.

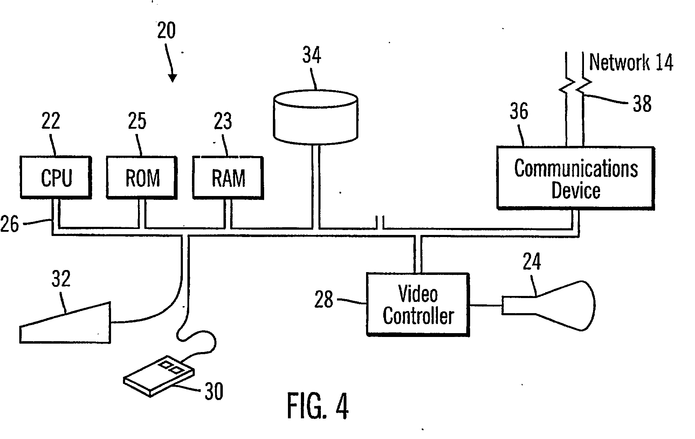

Turning now to Fig. 4, there is schematically illustrated one embodiment of a computer system 20 which may be configured as the messaging server 60 and/or teleconference server 952 for receiving, storing and/or transmitting messages. The computer system 20 communicates with the communication network 14, which may include IP networks, cellular networks and PSTN's. The computer system 20 includes a processor 22, internal random-access memory ("RAM") 23 and read-only memory ("ROM") 25, and data bus architecture 26 for coupling the processor 22 to various internal and external components. The computer system 20 further includes a communication device 36 which, in turn, is coupled to a communication channel 38 for effecting communication with the network 14. A mass storage device 34, such as a hard disk drive or floppy disk drive or CD-ROM drive, is coupled to the processor 22 for storing utility and application software (including a suitable web browser for navigating the Internet network) and other data. The application software is executed or performed by the processor 22.

Input devices controlled by the user are also coupled to the processor 22, including a cursor positioning device 30 and a keyboard 32 in accordance with the present invention. The cursor positioning device 30 is representative of any number of input devices that produce signals corresponding to a cursor location on a display 24, and may include by way of example, a mouse, a trackball, an electronic pen, or a touch-pad, which may be an integral part of the keyboard 32. The display 24 is coupled to the processor 22 through a video controller 28. The video controller 28 coordinates the presentation of information on the display 24 in one or more windows.

The messaging server 60 and the teleconference server 952 herein described may be coupled to, without limitation, distributed information exchange networks, such as PSTN, cellular network, public and private computer networks (e.g., Internet, Intranet, WAN, LAN, etc.), value-added networks, communications networks (e.g., wired or wireless networks), broadcast networks, and a homogeneous or heterogeneous combination of such networks. The notification message to the recipient may be sent via one or a combination of such networks. The recipient may retrieve the data file via one or a combination of such networks. As will be appreciated by those skilled in the art, the networks may include both hardware and software and can be viewed as either, or both, according to which description is most helpful for a particular purpose. For example, the messaging server 60 and the teleconference server 952 can be described as a set of hardware nodes that can be interconnected by a communications facility, or alternatively, as the communications facility, or alternatively, as the communications facility itself with or without the nodes. It will be further appreciated that the line between hardware and software is not always sharp, it being understood by those skilled in the art that such mediums and communications facility involve both software and hardware aspects.

Cross-reference is made to copending U.S. patent application ser. no. __________ (attorney docket no. 1004/213), entitled "A Method And System For Selecting A Communication Channel With A Recipient Devise Over a Communication Network", which is concurrently file on May 24, 2004, and commonly assigned to the assignee of the present invention.

The notification aspect of the present invention may be one of the available options for selection to be the best available mode or channel of communicating with a recipient.

### * * *

A method or process is here, and generally, conceived to be a self-consistent sequence of steps leading to a desired result. These steps require physical manipulations of physical quantities. Usually, though not necessarily, these quantities take the form of electrical or magnetic signals capable of being stored, transferred, combined, compared, and otherwise manipulated. It proves convenient at times, principally for reasons of common usage, to refer to these signals as bits, values, elements, symbols, characters, terms, numbers, or the like. It should be borne in mind, however, that all of these and similar terms are to be associated with the appropriate physical quantities and are merely convenient labels applied to these quantities.

Useful devices for performing the operations of the present invention include, but are not limited to, general or specific purpose communication, digital processing and/or computing devices, which devices may be standalone devices or part of a larger system. For example, the messaging server 60 and/or the teleconference server 952 each may be implemented as a unitary physical device, or a combination of several separate discrete physical devices operationally coupled together to form a functional messaging server, each with one or more dedicated functions. The devices may be selectively activated or reconfigured by a program. routine and/or a sequence of instructions and/or logic stored in the devices. In short, use of the methods described and suggested herein is not limited to a particular processing configuration.

It is appreciated that detailed discussion of the actual implementation of the messaging server 60 and/or teleconference sever 952, and other functional components disclosed herein is not necessary for an enabling understanding of the invention. The actual implementation is well within the routine skill of a programmer and system engineer, given the disclosure herein of the system attributes, functionality and inter-relationship of the various functional modules in the system. A person skilled in the art, applying ordinary skill can practice the present invention without undue experimentation.

Accordingly, it is to be understood that the invention is not to be limited by the specific illustrated embodiments, but only by the scope of the appended claims.

## Claims

1. A method for transmitting a data file (50) from a sender to a recipient comprising the steps of:
sender sending (104) said data file (50) using a sender device (40) to a messaging server (60) over a first communication network (58);
said messaging server (60) associating said data file (50) with a unique access address (66);
said messaging server (60) associating said unique access address (66) with a notification message (72);
said messaging server (60) sending (108) said notification message (72) containing said unique access address (66) to said recipient over a second communication network (76);
said recipient accessing said unique access address (66) to retrieve (112) said data file (50);
said messaging server (60) identifying the unique access address (66) used by the recipient; and
said messaging server (60) sending said data file (50) corresponding to the
unique access address (66) to said recipient
**characterised in that**:
said first communication network (58) and said second communication network (76) are disparate networks;
said sender device (40) stores recipient contact information;
to keep recipient contact information of said sender updated within an address book stored on said messaging server (60), said messaging server (60) periodically queries said sender device (40) for changes in said stored recipient contact information and downloads the recipient contact information stored in the sender device (40); and
said messaging server (60) sends said notification message (72) containing said unique access address (66) to said recipient based on said recipient contact information.

2. The method of Claim 1 wherein said notification message (72) is sent within at least one of a text message (78), a voice message and an electronic mail.

3. The method of Claim 1 wherein said step of said sender sending (104) said data file (50) comprises the steps of:
speaking a voice message into said sender device (40); and converting said voice message to text using speech-to-text processing.

4. The method of Claim 1 wherein said step of said sender sending (104) said data file (50) comprises the steps of:
inputting a text message into said sender device (40); and converting said text message to a voice message using text-to-speech processing.

5. The method of Claim 1 wherein the sender sends said data file (50) over a communication network (58) subscribed by the sender, and the messaging server (60) sends the notification message (72) to the recipient over a different network (76) subscribed by the recipient.

6. The method of Claim 1 wherein more than one data file (50) is sent, and wherein a different unique access address (66) is associated with a different data file (50).

7. The method of Claim 1 wherein said step of said messaging server (60) identifying the unique access address (66) comprises the steps of: messaging server (60) determining a dialed access phone number with a dialed number identification service (DNIS); and messaging server (60) determining a data file (50) associated with said dialed access phone number.

8. The method of Claim 7 wherein said step of said recipient accessing said unique access address to retrieve (112) said data file further comprises the step of authenticating the recipient.

9. The method of Claim 8 further comprising the step of the sender designating a recipient device (82) address to which the notification message (72) is to be sent to the recipient, and the step of authenticating the recipient includes the step of verifying one of said recipient contact information and personal identification information wherein said personal identification information comprises at least one of name, user identification number and personal identification number code.

10. The method of Claim 1 wherein the data file (52) is transmitted over a cellular network (48), wherein the sender has a sender cellular device (42) and the recipient has a recipient cellular device (84), and wherein the sender sends the data file (52) using the sender cellular device (42), and the recipient accesses the unique access address to retrieve the data file (52) using the recipient cellular device (84).

11. The method of Claim 10, wherein the notification message (78) is sent via text messaging to the recipient cellular device (84).

12. The method of Claim 11, wherein the sender cellular device (42) communicates with a first cellular network (48) to which the sender subscribes, and the recipient cellular device (84) communicates with a second cellular network (74) to which the recipient subscribes.

13. A messaging server (60) for transmitting a data file from a sender device (40) to a recipient device (82), said messaging server (60) comprising:
a data receiver (202) for receiving said data file from said sender device (40) over a first communication network (58);
a notification message transmitter (204) for associating said data file with a unique access address and for associating said unique access address with a notification message, and for sending said notification message containing said unique access address to said recipient device over a second communication network; and
a data file transmitter (206) for providing access to a recipient using said unique access address, and for sending said data file from said messaging server to
said recipient device,
**characterised in that**:
said first communication network (58) and said second communication network (76) are disparate networks;
said sender device (40) comprises a memory device for storing recipient contact information;
to keep recipient contact information of said sender updated within an address book stored on said messaging server (60), said messaging server (60) is adapted to periodically query said sender device (40) for changes in said recipient contact information in said memory device and to download the recipient contact information stored in the memory device; and
said messaging server (60) is adapted to send said notification message (72) containing said unique access address to said recipient device (82) based on said recipient contact information.

14. A network system, for transmitting a data file (50) from a sender device (40) to a recipient device (82), comprising a messaging server (60) as claimed in claim 13, said system comprising:
one or more nodes to provide access for said sender device (40);
one or more nodes to provide access for said recipient device (82);
one or more nodes to provide access by the messaging server (60).

15. The network system of Claim 14, wherein said network comprises at least one of a cellular network, a wide area network, a telephony network, an IP network and a data network.

16. A machine-readable medium for programming a computer to forward a data file from a sender device (40) to a recipient device (82), said medium including processor executable instructions comprising:
a first program module receiving said data file (50) from said sender device (40) over a first communication network;
a second program module associating said data file (50) with a unique access address (66) and associating said unique access address (66) with a notification message (72), and sending said notification message (72) containing said unique access address (66) to said recipient device (82) over a second communication network; and
a data file transmitter module providing access to the recipient using said unique access address (66), and sending said data file (50) from said computer to said
recipient device (82),
**characterised in that**:
said first communication network (58) and said second communication network (76) are disparate networks;
said sender device (40) comprises a memory device for storing recipient contact information;
to keep recipient contact information of said sender updated within an address book stored on said messaging server (60), said second program module periodically querying said sender device (40) for changes in said recipient contact information in said memory device and downloading the recipient contact information stored in the memory device; and
said second program module sending said notification message (72) containing said unique access address (66) to said recipient device (82) based on said recipient contact information.

17. The method of claim 1, wherein said data file (50) comprises at least one of a text message, a voice message, an audio file, a video file, a text file, an image file, an executable file, and a multimedia file and wherein at least one of the audio file, video file and multimedia file is captured using a sender device (40), and said data (50) is sent to the messaging server (60) using at least one of store-and- forward and streaming.

18. The method of claim 17, wherein said at least one of the audio file, video file and multimedia file is send by the messaging server (60) to the recipient using at least one of store-and- forward and streaming.

19. The method of claim 1, wherein said messaging server (60) sends notification messages (72) associated with said unique access address (50) to a plurality of recipients.

20. The method of claim 9, wherein the sender designates more than one recipient device (82) to which notification messages (72) are to be sent to said recipient, thereby providing notification redundancy.

21. The method of claim 1, wherein a recipient device (82) that receives the notification message (72) is different from a recipient device that retrieves the data file (50) associated with the unique access address (66) in the notification message (72).

22. The method of claim 1, wherein the data file (50) created by the sender further comprises one of a text message and a voice message, and wherein the mode of said data file (50) is converted to a mode appropriate to the type of the intended recipient device (82).

23. The method of claim 20, wherein a cancellation message is sent to each of the recipient devices (82) that earlier received the notification message (72) once the associated data file (50) is retrieved by the recipient.

24. The method of claim 19, wherein each recipient is assigned a unique access addresses (66) for the same data file (50).

25. The method of claim 1, wherein a network (76) through which the notification message (72) is sent to the recipient is different from a network through which the associated data file (50) is retrieved by the recipient.

26. The method of claim 8, wherein said step of authenticating said recipient by said messaging server comprises authenticating a caller as the intended recipient if caller identification of said caller matches said recipient contact information.

## Patentansprüche

1. Verfahren zum Übertragen einer Datendatei (50) von einem Sender zu einem Empfänger, das die folgenden Schritte beinhaltet:
Senden (104), durch den Sender, der genannten Datendatei (50) mit einem Sendegerät (40) zu einem Messaging-Server (60) über ein erstes Kommunikationsnetz (58);
Assoziieren, durch den genannten Messaging-Server (60), der genannten Datendatei (50) mit einer eindeutigen Zugangsadresse (66);
Assoziieren, durch den genannten Messaging-Server (60), der genannten eindeutige Zugangsadresse (66) mit einer Benachrichtigungsmeldung (72);
Senden (108), durch den genannten Messaging-Server (60), der genannten Benachrichtigungsmeldung (72), die die genannte eindeutige Zugangsadresse (66) enthält, über ein zweites Kommunikationsnetz (76) zu dem genannten Empfänger;
Zugreifen, durch den genannten Empfänger, auf die genannte eindeutige Zugangsadresse (66), um die genannte Datendatei (50) abzurufen (112);
Identifizieren, durch den genannten Messaging-Server (60), der eindeutigen Zugangsadresse (66), die vom Empfänger benutzt wird; und
Senden, durch den genannten Messaging-Server (60), der genannten Datendatei (50), die der eindeutigen Zugangsadresse (66) entspricht, zu dem genannten Empfänger, **dadurch gekennzeichnet, dass**:
das genannte erste Kommunikationsnetz (58) und das genannte zweite Kommunikationsnetz (76) disparate Netzwerke sind;
das genannte Sendegerät (40) Empfängerkontaktinformationen speichert;
der genannte Messaging-Server (60), zum Halten von Empfängerkontaktinformationen des genannten Senders in einem auf dem genannten Messaging-Server (60) gespeicherten Adressbuch auf dem neuesten Stand, das genannte Sendegerät (40) periodisch auf Änderungen der genannten gespeicherten Empfängerkontaktinformationen abfragt und die im Sendegerät (40) gespeicherten Empfängerkontaktinformationen herunterlädt; und
der genannte Messaging-Server (60) die genannte Benachrichtigungsmeldung (72), die die genannte eindeutige Zugangsadresse (66) enthält, auf der Basis der genannten Empfängerkontaktinformationen zu dem genannten Empfänger sendet.

2. Verfahren nach Anspruch 1, wobei die genannte Benachrichtigungsmeldung (72) in wenigstens einem aus einer Textmeldung (78), einer Sprachmeldung und einer Email gesendet wird.

3. Verfahren nach Anspruch 1, wobei der genannte Schritt des Sendens (104), durch den genannten Sender, der genannten Datendatei (50) die folgenden Schritte beinhaltet:
Sprechen einer Sprachmeldung in das genannte Sendegerät (40); und Umwandeln der genannten Sprachmeldung in Text durch Sprache-in-Text-Verarbeitung.

4. Verfahren nach Anspruch 1, wobei der genannte Schritt des Sendens (104), durch den genannten Sender, der genannten Datendatei (50) die folgenden Schritte beinhaltet:
Eingeben einer Textmeldung in das genannte Sendegerät (40); und Umwandeln der genannten Textmeldung in eine Sprachmeldung mit Text-in-Sprache-Verarbeitung.

5. Verfahren nach Anspruch 1, wobei der Sender die genannte Datendatei (50) über ein vom Sender abonniertes Kommunikationsnetz (58) sendet und der Messaging-Server (60) die Benachrichtigungsmeldung (72) über ein anderes, vom Empfänger abonniertes Netzwerk (76) zum Empfänger sendet.

6. Verfahren nach Anspruch 1, wobei mehr als eine Datendatei (50) gesendet wird und wobei eine andere eindeutige Zugangsadresse (66) mit einer anderen Datendatei (50) assoziiert wird.

7. Verfahren nach Anspruch 1, wobei der genannte Schritt des Identifizierens, durch den genannten Messaging-Server (60), der eindeutigen Zugangsadresse (66) die folgenden Schritte beinhaltet: Ermitteln, durch den Messaging-Server (60), einer gewählten Zugangstelefonnummer mit einem gewählten Service zum Identifizieren von gewählten Nummern (DNIS); und Ermitteln, durch den Messaging-Server (60), einer mit der genannten gewählten Zugangstelefonnummer assoziierten Datendatei (50).

8. Verfahren nach Anspruch 7, wobei der genannte Schritt des Zugreifens, durch den genannten Empfänger, auf die genannte eindeutige Zugangsadresse zum Abrufen (112) der genannten Datendatei ferner den Schritt des Authentifizierens des Empfängers beinhaltet.

9. Verfahren nach Anspruch 8, das ferner den Schritt des Designierens, durch den Sender, einer Adresse eines Empfangsgeräts (82) beinhaltet, zu der die Benachrichtigungsmeldung (72) zum Empfänger zu senden ist, und der Schritt des Authentifizierens des Empfängers den Schritt des Verifizierens der genannten Empfängerkontaktinformationen oder der persönlichen Identifikationsinformationen beinhaltet, wobei die genannten persönlichen Identifikationsinformationen wenigstens eines aus Name, Benutzeridentifikationsnummer und persönlichem Identifikationsnummerncode beinhaltet.

10. Verfahren nach Anspruch 1, wobei die Datendatei (52) über ein zelluläres Netzwerk (48) übertragen wird, wobei der Sender ein zelluläres Sendegerät (42) hat und der Empfänger ein zelluläres Empfangsgerät (84) hat, und wobei der Sender die Datendatei (52) mit dem zellulären Sendegerät (42) sendet und der Empfänger auf die eindeutige Zugangsadresse zugreift, um die Datendatei (52) mit dem zellulären Empfangsgerät (84) abzurufen.

11. Verfahren nach Anspruch 10, wobei die Benachrichtigungsmeldung (78) per Text-Messaging zum zellulären Empfangsgerät (84) gesendet wird.

12. Verfahren nach Anspruch 11, wobei das zelluläre Sendegerät (42) mit einem vom Sender abonnierten ersten zellulären Netzwerk (48) kommuniziert und das zelluläre Empfangsgerät (84) mit einem vom Empfänger abonnierten zweiten zellulären Netzwerk (74) kommuniziert.

13. Messaging-Server (60) zum Übertragen einer Datendatei von einem Sendegerät (40) zu einem Empfangsgerät (82), wobei der genannte Messaging-Server (60) Folgendes umfasst:
einen Datenempfänger (202) zum Empfangen der genannten Datendatei von dem genannten Sendegerät (40) über ein erstes Kommunikationsnetz (58);
einen Benachrichtigungsmeldungssender (204) zum Assoziieren der genannten Datendatei mit einer eindeutigen Zugangsadresse und zum Assoziieren der eindeutigen Zugangsadresse mit einer Benachrichtigungsmeldung, und zum Senden der genannten Benachrichtigungsmeldung, die die genannte eindeutige Zugangsadresse enthält, zu dem genannten Empfangsgerät über ein zweites Kommunikationsnetz; und
einen Datendatei-Sender (206) zum Bereitstellen von Zugang zu einem Empfänger über die genannte eindeutige Zugangsadresse und zum Senden der genannten Datendatei von dem genannten Messaging-Server zu dem genannten Empfangsgerät,
**dadurch gekennzeichnet, dass**:
das genannte erste Kommunikationsgerät (58) und das genannte zweite Kommunikationsgerät (76) disparate Netzwerke sind;
das genannte Sendegerät (40) ein Speichergerät zum Speichern von Empfängerkontaktinformationen umfasst;
der genannte Messaging-Server (60) so ausgelegt ist, dass er, zum Halten von Empfängerkontaktinformationen des genannten Senders in einem auf dem genannten Messaging-Server (60) gespeicherten Adressbuch auf dem neuesten Stand, das genannte Sendegerät (40) periodisch auf Änderungen der genannten Empfängerkontaktinformationen in dem genannten Speichergerät abfragt und die im Speichergerät gespeicherten Empfängerkontaktinformationen herunterlädt; und
der genannte Messaging-Server (60) zum Senden der genannten Benachrichtigungsmeldung (72), die die genannte eindeutige Zugangsadresse enthält, zu dem genannten Empfangsgerät (82) auf der Basis der genannten Empfängerkontaktinformationen ausgelegt ist.

14. Netzwerksystem zum Übertragen einer Datendatei (50) von einem Sendegerät (40) zu einem Empfangsgerät (82), umfassend einen Messaging-Server (60) nach Anspruch 13, wobei das genannte System Folgendes umfasst:
einen oder mehrere Knoten zum Bereitstellen von Zugang für das genannte Sendegerät (40);
einen oder mehrere Knoten zum Bereitstellen von Zugang für das genannte Empfangsgerät (82);
einen oder mehrere Knoten zum Bereitstellen von Zugang durch den Messaging-Server (60).

15. Netzwerksystem nach Anspruch 14, wobei das genannte Netzwerk wenigstens eines aus zellulärem Netzwerk, Weitverkehrsnetzwerk, Telefonienetzwerk, IP-Netzwerk und Datennetzwerk umfasst.

16. Maschinenlesbares Medium zum Programmieren eines Computers zum Weiterleiten einer Datendatei von einem Sendegerät (40) zu einem Empfangsgerät (82), wobei das genannte Medium von einem Prozessor ausführbare Befehle beinhaltet, die Folgendes umfassen:
Empfangen, durch ein erstes Programmmodul, der genannten Datendatei (50) von dem genannten Sendegerät (40) über ein erstes Kommunikationsnetz;
Assoziieren, durch ein zweites Programmmodul, der genannten Datendatei (50) mit einer eindeutigen Zugangsadresse (66) und Assoziieren der genannten eindeutigen Zugangsadresse (66) mit einer Benachrichtigungsmeldung (72) und Senden der genannten Benachrichtigungsmeldung (72), die die genannte eindeutige Zugangsadresse (66) enthält, zu dem genannten Empfangsgerät (82) über ein zweites Kommunikationsnetz; und
Bereitstellen, durch ein Datendateiübertragungsmodul, des Zugangs zu dem Empfänger über die genannte eindeutige Zugangsadresse (66) und Senden der genannten Datendatei (50) von dem genannten Computer zu dem genannten Empfangsgerät (82),
**dadurch gekennzeichnet, dass**:
das genannte erste Kommunikationsnetz (58) und das genannte zweite Kommunikationsnetz (76) disparate Netzwerke sind;
das genannte Sendegerät (40) ein Speichergerät zum Speichern von Empfängerkontaktinformationen umfasst;
das genannte zweite Programmmodul, zum Halten von Empfängerkontaktinformationen des genannten Senders in einem auf dem genannten Messaging-Server (60) gespeicherten Adressbuch auf dem neuesten Stand, das genannte Sendegerät (40) periodisch auf Änderungen in den genannten Empfängerkontaktinformationen und dem genannten Speichergerät abfragt und die in dem Speichergerät gespeicherten Empfängerkontaktinformationen herunterlädt; und
wobei das genannte zweite Programmmodul die genannte Benachrichtigungsmeldung (72), die die genannte eindeutige Zugangsadresse (66) enthält, zu dem genannten Empfangsgerät (82) auf der Basis der genannten Empfängerkontaktinformationen sendet.

17. Verfahren nach Anspruch 1, wobei die genannte Datendatei (50) wenigstens eines aus einer Textmeldung, einer Sprachmeldung, einer Audiodatei, einer Videodatei, einer Textdatei, einer Bilddatei, einer ablauffähigen Datei und einer Multimedia-Datei umfasst und wobei wenigstens eines aus Audiodatei, Videodatei und Multimedia-Datei mit einem Sendegerät (40) erfasst wird und die genannten Daten (50) zu dem genannten Messaging-Server (60) über wenigstens eines aus Store-and-Forward und Streaming gesendet werden.

18. Verfahren nach Anspruch 17, wobei die genannte wenigstens eine aus Audiodatei, Videodatei und Multimedia-Datei vom Messaging-Server (60) über wenigstens eines aus Store-and-Forward und Streaming zum Empfänger gesendet wird.

19. Verfahren nach Anspruch 1, wobei der genannte Messaging-Server (60) mit der genannten eindeutigen Zugangsadresse (50) assoziierte Benachrichtigungsmeldungen (72) zu mehreren Empfängern sendet.

20. Verfahren nach Anspruch 9, wobei der Sender mehr als ein Empfangsgerät (82) designiert, zu dem Benachrichtigungsmeldungen (72) zu dem genannten Empfänger zu senden sind, um dadurch Benachrichtigungsredundanz bereitzustellen.

21. Verfahren nach Anspruch 1, wobei sich ein Empfangsgerät (82), das die Benachrichtigungsmeldung (72) empfängt, von einem Empfangsgerät unterscheidet, das die mit der eindeutigen Zugangsadresse (66) in der Benachrichtungsmeldung (72) assoziierte Datendatei (50) abruft.

22. Verfahren nach Anspruch 1, wobei die vom Sender erzeugte Datendatei (50) ferner eines aus einer Textmeldung und einer Sprachmeldung umfasst und wobei der Modus der genannten Datendatei (50) in einen Modus umgewandelt wird, der für den Typ des beabsichtigten Empfangsgeräts (82) geeignet ist.

23. Verfahren nach Anspruch 20, wobei eine Stornierungsmeldung zu jedem der Empfangsgeräte (82) gesendet wird, die die Benachrichtigungsmeldung (72) früher empfangen haben, wenn die assoziierte Datendatei (50) vom Empfänger abgerufen wird.

24. Verfahren nach Anspruch 19, wobei jedem Empfänger eine eindeutige Zugangsadresse (66) für dieselbe Datendatei (50) zugeordnet wird.

25. Verfahren nach Anspruch 1, wobei sich ein Netzwerk (76), durch das die Benachrichtigungsmeldung (72) zum Empfänger gesendet wird, von einem Netzwerk unterscheidet, über das die assoziierte Datendatei (50) vom Empfänger abgerufen wird.

26. Verfahren nach Anspruch 8, wobei der genannte Schritt des Authentifizierens des genannten Empfängers durch den genannten Messaging-Server das Authentifizieren eines Anrufers als den beabsichtigten Empfänger beinhaltet, wenn die Anruferidentifikation des genannten Anrufers mit den genannten Empfängerkontaktinformationen übereinstimmt.

## Revendications

1. Un procédé de transmission d'un fichier de données (50) d'un expéditeur vers un destinataire comprenant les opérations suivantes :
l'envoi (104) par l'expéditeur dudit fichier de données (50) au moyen d'un dispositif d'expédition (40) à un serveur de messagerie (60) par l'intermédiaire d'un premier réseau de communication (58),
l'association par ledit serveur de messagerie (60) dudit fichier de données (50) à une adresse d'accès unique (66),
l'association par ledit serveur de messagerie (60) de ladite adresse d'accès unique (66) à un message de notification (72),
l'envoi (108) par ledit serveur de messagerie (60) dudit message de notification (72) contenant ladite adresse d'accès unique (66) audit destinataire par l'intermédiaire d'un deuxième réseau de communication (76),
l'accès par ledit destinataire à ladite adresse d'accès unique (66) de façon à récupérer (112) ledit fichier de données (50),
l'identification par ledit serveur de messagerie (60) de l'adresse d'accès unique (66) utilisée par le destinataire, et
l'envoi par ledit serveur de messagerie (60) dudit fichier de données (50) correspondant à l'adresse d'accès unique (66) audit destinataire
**caractérisé en ce que** :
ledit premier réseau de communication (58) et ledit deuxième réseau de communication (76) sont des réseaux disparates,
ledit dispositif d'expédition (40) conserve en mémoire des informations de contact de destinataire,
afin de maintenir des informations de contact de destinataire dudit expéditeur actualisées à l'intérieur d'un carnet d'adresses conservé en mémoire sur ledit serveur de messagerie (60), ledit serveur de messagerie (60) interroge périodiquement ledit dispositif d'expédition (40) à la recherche de modifications dans lesdites informations de contact de destinataire conservées en mémoire et télécharge les informations de contact de destinataire conservées en mémoire dans le dispositif d'expédition (40), et
ledit serveur de messagerie (60) envoie ledit message de notification (72) contenant ladite adresse d'accès unique (66) audit destinataire en fonction desdites informations de contact de destinataire.

2. Le procédé selon la Revendication 1 où ledit message de notification (72) est envoyé à l'intérieur d'au moins un élément parmi un message textuel (78), un message vocal et un message électronique.

3. Le procédé selon la Revendication 1 où ladite opération d'envoi (104) par ledit expéditeur dudit fichier de données (50) comprend les opérations suivantes :
l'expression d'un message vocal dans ledit dispositif d'expédition (40) et la conversion dudit message vocal en texte au moyen d'un traitement de parole en texte.

4. Le procédé selon la Revendication 1 où ladite opération d'envoi (104) par ledit expéditeur dudit fichier de données (50) comprend les opérations suivantes :
l'entrée d'un message textuel dans ledit dispositif d'expédition (40) et la conversion dudit message textuel en un message vocal au moyen d'un traitement de texte en parole.

5. Le procédé selon la Revendication 1 où l'expéditeur envoie ledit fichier de données (50) par l'intermédiaire d'un réseau de communication (58) auquel l'expéditeur est abonné, et le serveur de messagerie (60) envoie le message de notification (72) au destinataire par l'intermédiaire d'un réseau différent (76) auquel le destinataire est abonné.

6. Le procédé selon la Revendication 1 où plus d'un fichier de données (50) est envoyé et où une adresse d'accès unique différente (66) est associée à un fichier de données différent (50).

7. Le procédé selon la Revendication 1 où ladite opération d'identification par ledit serveur de messagerie (60) de l'adresse d'accès unique (66) comprend les opérations suivantes : la détermination par le serveur de messagerie (60) d'un numéro de téléphone d'accès composé avec un service d'identification de numéro composé (DNIS), et la détermination par le serveur de messagerie (60) d'un fichier de données (50) associé audit numéro de téléphone d'accès composé.

8. Le procédé selon la Revendication 7 où ladite opération d'accès par ledit destinataire à ladite adresse d'accès unique de façon à récupérer (112) ledit fichier de données comprend en outre l'opération d'authentification du destinataire.

9. Le procédé selon la Revendication 8 comprenant en outre l'opération de désignation par l'expéditeur d'une adresse de dispositif de destination (82) à laquelle le message de notification (72) doit être envoyé au destinataire, et l'opération d'authentification du destinataire comprend l'opération de vérification d'informations parmi lesdites informations de contact de destinataire et lesdites informations d'identification personnelles où lesdites informations d'identification personnelles comprennent au moins un élément parmi nom, numéro d'identification d'utilisateur et code de numéro d'identification personnel.

10. Le procédé selon la Revendication 1 où le fichier de données (52) est transmis par l'intermédiaire d'un réseau cellulaire (48), où l'expéditeur possède un dispositif cellulaire d'expédition (42) et le destinataire possède un dispositif cellulaire de destination (84), et où l'expéditeur envoie le fichier de données (52) au moyen du dispositif cellulaire d'expédition (42) et le destinataire accède à l'adresse d'accès unique de façon à récupérer le fichier de données (52) au moyen du dispositif cellulaire de destination (84).

11. Le procédé selon la Revendication 10, où le message de notification (78) est envoyé par l'intermédiaire d'une messagerie textuelle au dispositif cellulaire de destination (84).

12. Le procédé selon la Revendication 11, où le dispositif cellulaire d'expédition (42) communique avec un premier réseau cellulaire (48) auquel l'expéditeur est abonné et le dispositif cellulaire de destination (84) communique avec un deuxième réseau cellulaire (74) auquel le destinataire est abonné.

13. Un serveur de messagerie (60) destiné à la transmission d'un fichier de données d'un dispositif d'expédition (40) à un dispositif de destination (82), ledit serveur de messagerie (60) comprenant :
un récepteur de données (202) destiné à la réception dudit fichier de données à partir dudit dispositif d'expédition (40) par l'intermédiaire d'un premier réseau de communication (58),
un émetteur d'un message de notification (204) destiné à associer ledit fichier de données à une adresse d'accès unique et à associer ladite adresse d'accès unique à un message de notification et à envoyer ledit message de notification contenant ladite adresse d'accès unique audit dispositif de destination par l'intermédiaire d'un deuxième réseau de communication, et
un émetteur d'un fichier de données (206) destiné à la fourniture d'un accès à un destinataire au moyen de ladite adresse d'accès unique et à l'envoi dudit
fichier de données dudit serveur de messagerie audit dispositif de destination,
**caractérisé en ce que** :
ledit premier réseau de communication (58) et ledit deuxième réseau de communication (76) sont des réseaux disparates,
ledit dispositif d'expédition (40) comprend un dispositif à mémoire destiné à la conservation en mémoire d'informations de contact de destinataire,
afin de maintenir des informations de contact de destinataire dudit expéditeur actualisées à l'intérieur d'un carnet d'adresses conservé en mémoire sur ledit serveur de messagerie (60), ledit serveur de messagerie (60) est adapté de façon à interroger périodiquement ledit dispositif d'expédition (40) à la recherche de modifications dans lesdites informations de contact de destinataire dans ledit dispositif à mémoire et à télécharger les informations de contact de destinataire conservées en mémoire dans le dispositif à mémoire, et
ledit serveur de messagerie (60) est adapté de façon à envoyer ledit message de notification (72) contenant ladite adresse d'accès unique audit dispositif de destination (82) en fonction desdites informations de contact de destinataire.

14. Un système de réseau destiné à la transmission d'un fichier de données (50) d'un dispositif d'expédition (40) à un dispositif de destination (82), comprenant un serveur de messagerie (60) selon la Revendication 13, ledit système comprenant :
un ou plusieurs noeuds destinés à la fourniture d'un accès audit dispositif d'expédition (40),
un ou plusieurs noeuds destinés à la fourniture d'un accès audit dispositif de destination (82),
un ou plusieurs noeuds destinés à la fourniture d'un accès par le serveur de messagerie (60).

15. Le système de réseau selon la Revendication 14, où ledit réseau comprend au moins un réseau parmi un réseau cellulaire, un réseau étendu, un réseau de téléphonie, un réseau IP et un réseau de données.

16. Un support lisible par ordinateur destiné à la programmation d'un ordinateur en vue de transmettre un fichier de données d'un dispositif d'expédition (40) à un dispositif de destination (82), ledit support contenant des instructions exécutables par un processeur comprenant :
la réception par un premier module de programme dudit fichier de données (50) à partir dudit dispositif d'expédition (40) par l'intermédiaire d'un premier réseau de communication,
l'association dudit fichier de données (50) à une adresse d'accès unique (66) et
l'association de ladite adresse d'accès unique (66) à un message de notification (72), et l'envoi dudit message de notification (72) contenant ladite adresse d'accès unique (66) audit dispositif de destination (82) par l'intermédiaire d'un deuxième réseau de communication par un deuxième module de programme, et
la fourniture d'un accès au destinataire au moyen de ladite adresse d'accès unique (66), et l'envoi dudit fichier de données (50) dudit ordinateur audit
dispositif de destination (82) par un module d'émission d'un fichier de données,
**caractérisé en ce que** :
ledit premier réseau de communication (58) et ledit deuxième réseau de communication (76) sont des réseaux disparates,
ledit dispositif d'expédition (40) comprend un dispositif à mémoire destiné à la conservation en mémoire d'informations de contact de destinataire,
afin de maintenir des informations de contact de destinataire dudit expéditeur actualisées à l'intérieur d'un carnet d'adresses conservé en mémoire sur ledit serveur de messagerie (60), ledit deuxième module de programme interroge périodiquement ledit dispositif d'expédition (40) à la recherche de modifications dans lesdites informations de contact de destinataire dans ledit dispositif à mémoire et télécharge les informations de contact de destinataire conservées en mémoire dans le dispositif à mémoire, et
l'envoi par ledit deuxième module de programme dudit message de notification (72) contenant ladite adresse d'accès unique (66) audit dispositif de destination (82) en fonction desdites informations de contact de destinataire.

17. Le procédé selon la Revendication 1, où ledit fichier de données (50) comprend au moins un élément parmi un message textuel, un message vocal, un fichier audio, un fichier vidéo, un fichier textuel, un fichier image, un fichier exécutable et un fichier multimédia, et où au moins un fichier parmi le fichier audio, le fichier vidéo et le fichier multimédia est capturé au moyen d'un dispositif d'expédition (40), et lesdites données (50) sont envoyées au serveur de messagerie (60) au moyen d'au moins une opération parmi réception-retransmission et diffusion en continu.

18. Le procédé selon la Revendication 17, où ledit au moins un fichier parmi le fichier audio, le fichier vidéo et le fichier multimédia est envoyé par le serveur de messagerie (60) au destinataire au moyen d'au moins une opération parmi réception-retransmission et diffusion en continu.

19. Le procédé selon la Revendication 1, où ledit serveur de messagerie (60) envoie des messages de notification (72) associés à ladite adresse d'accès unique (50) à une pluralité de destinataires.

20. Le procédé selon la Revendication 9, où l'expéditeur désigne plus d'un dispositif de destination (82) auxquels des messages de notification (72) sont à envoyer audit destinataire, fournissant ainsi une redondance de notification.

21. Le procédé selon la Revendication 1, où un dispositif de destination (82) qui reçoit le message de notification (72) est différent d'un dispositif de destination qui récupère le fichier de données (50) associé à l'adresse d'accès unique (66) dans le message de notification (72).

22. Le procédé selon la Revendication 1, où le fichier de données (50) créé par l'expéditeur contient en outre un message parmi un message textuel et un message vocal, et où le mode dudit fichier de données (50) est converti en un mode approprié au type du dispositif de destination prévu (82).

23. Le procédé selon la Revendication 20, où un message d'annulation est envoyé à chacun des dispositifs de destination (82) qui ont reçu antérieurement le message de notification (72) une fois que le fichier de données associé (50) a été récupéré par le destinataire.

24. Le procédé selon la Revendication 19, où à chaque destinataire est attribué une adresse d'accès unique (66) pour le même fichier de données (50).

25. Le procédé selon la Revendication 1, où un réseau (76) par l'intermédiaire duquel le message de notification (72) est envoyé au destinataire est différent d'un réseau par l'intermédiaire duquel le fichier de données associé (50) est récupéré par le destinataire.

26. Le procédé selon la Revendication 8, où ladite opération d'authentification dudit destinataire par ledit serveur de messagerie comprend l'authentification d'un appelant en tant que destinataire prévu si l'identification de l'appelant dudit appelant correspond auxdites informations de contact de destinataire.
